# FASCICULE DE BREVET EUROPEEN

(11) **EP 2 861 463 B1**
(45) Date de publication et mention de la délivrance du brevet: **28.09.2016**
(21) Numéro de dépôt: 13728432.9
(22) Date de dépôt: 14.06.2013
(51) Int. Cl.: B60R 11/02

(54) **AGENCEMENT POUR LE MONTAGE D'UN APPAREIL NOMADE**
ANORDNUNG FÜR DIE MONTAGE EINES TRAGBAREN GERÄTES
ARRANGEMENT FOR MOUNTING A PORTABLE DEVICE

(30) Priorité: 15.06.2012 FR 1255634; 04.04.2013 FR 1353040; 12.06.2013 FR 1355429
(43) Date de publication de la demande: 22.04.2015
(73) Titulaire: Delphi Technologies, Inc., Troy, MI 48007 (US)
(72) Inventeur: RASSENT.Maxime, F-67100 Strasbourg (FR); VAYER, David, F-67150 Ertsein (FR)
(74) Mandataire: Delphi France SAS
(86) Numéro de dépôt international: PCT/EP2013/062451
(87) Numéro de publication internationale: WO 2013/186391

(56) Documents cités:
- WO-A1-2010/127821
- FR-A1- 2 954 611
- US-A- 5 996 866
- US-A1- 2003 041 206
- US-A1- 2009 088 227

## Description

### DOMAINE TECHNIQUE

La présente invention concerne l'agencement d'un appareil nomade, de type téléphone portable ou « smartphone » ou encore tablette électronique, dans un équipement pouvant par exemple être un accoudoir ou une console centrale de véhicule. Plus particulièrement, l'agencement se fait avec coincement, connexion électrique et liaison au réseau de l'appareil.

### ARRIERE-PLAN TECHNOLOGIQUE DE L'INVENTION

On connait des dispositifs permettant l'installation d'un appareil nomade, type téléphone portable à écran tactile ou « smartphone » dans des équipements divers, par exemple un accoudoir de fauteuil ou une console centrale automobile.

La demande FR1255634 enseigne un agencement particulier dans lequel la surface visible de l'appareil nomade, généralement l'écran tactile, est en continuité de surface avec la surface de l'équipement. De plus, lorsque l'appareil nomade est retiré, un camouflage se place automatiquement ne laissant pas voir l'emplacement vide destiné à l'appareil nomade. L'agencement peut de plus être pourvu d'un moyen qui retient en place l'appareil nomade dans son emplacement.

La demande FR1343040 enseigne un arrangement pourvu d'un dispositif de maintien et d'un dispositif de connexion électrique de l'appareil nomade, les deux dispositifs étant activés manuellement une fois l'appareil mis en place, la manipulation délicate de l'appareil visant à sa mise en place précise pouvant attirer et retenir l'attention d'un conducteur de véhicule.

La demande FR1355429 enseigne un arrangement pourvu d'une motorisation et d'un dispositif de commande permettant de connecter et coincer l'appareil nomade par simple enfoncement.

Cette dernière version demeure dépendante d'une connexion électrique pour alimenter le moteur.

La publication US 2003/0041206 A1 divulgue un agencement d'après le préambule de la revendication 1.

### RESUME DE L'INVENTION

La présente invention vise à résoudre ces problèmes en proposant un agencement pour le montage d'un appareil nomade dans un équipement ayant une façade de style, notamment dans un véhicule automobile. La façade de style étant pourvue d'une ouverture donnant accès à un logement apte à recevoir l'appareil nomade., L'agencement comprend une embase fixée au fond du logement, un support mobile, déplaçable par rapport à l'embase entre une position enfoncée dans laquelle il est proche de l'embase et une position libre dans laquelle il est éloigné de l'embase. Le support mobile a une paroi principale apte à recevoir l'appareil nomade. Il comprend également un dispositif de retenue qui maintient le support mobile, dans ses positions libre et enfoncée de sorte qu'en position enfoncée la face-avant de l'appareil nomade affleure par l'ouverture et est en continuité de surface avec la façade de style de l'équipement et, en position libre. La paroi principale du support mobile affleure par l'ouverture et est en continuité de surface avec la façade de style de l'équipement.

L'agencement comprend de plus un moyen élastique agencé entre le support mobile et l'embase le moyen élastique sollicitant en permanence le support mobile vers la position libre.

Le support mobile comprend un support générique indépendant du modèle d'appareil nomade, et un adaptateur d'épaisseur interchangeable et spécifique à un modèle particulier d'appareil nomade. L'adaptateur d'épaisseur est agencé sur le support générique son épaisseur est choisie en fonction de l'épaisseur de l'appareil nomade de sorte qu'en position enfoncée la face-avant de l'appareil nomade dudit modèle soit en continuité de surface avec la façade de style.

L'agencement comprend de plus un adaptateur périphérique interchangeable et spécifique à un modèle particulier d'appareil nomade. L'adaptateur périphérique est agencé et fixé dans l'ouverture du logement et est lui-même pourvu d'une ouverture spécifique aux dimensions du modèle d'appareil nomade. L'appareil nomade A est mis en place sa face-avant obture entièrement l'ouverture spécifique tout en étant en continuité de surface avec la façade de style de l'équipement.

Le dispositif de retenue comprend une came et un index, la came étant solidaire du support mobile ou de l'embase et l'index étant solidaire de l'embase respectivement du support mobile. La came et l'index coopérent de sorte qu'en une position relative déterminée de la came et de l'index le support mobile, soit retenu en position enfoncée.

Le dispositif de retenue comprend une butée solidaire du support mobile qui coopère avec une surface d'appui solidaire de la façade de style de sorte à retenir le support mobile en position libre.

La paroi principale du support mobile, comporte un couvercle de style amovible et interchangeable.

L'agencement comprend de plus un dispositif de maintien en place dans l'emplacement de l'appareil nomade.

Le dispositif comprend une platine déplaçable entre une position ouverte dans laquelle l'appareil nomade peut être mis ou retiré de l'emplacement et une position fermée dans laquelle l'appareil nomade est maintenu en place dans l'emplacement.

Le dispositif de maintien est pourvu d'un moyen élastique qui en position fermée de la platine exerce un effort sur l'appareil nomade de sorte que l'appareil nomade A est maintenu en place.

L'agencement comprend de plus un second moyen élastique agencés sur la platine de sorte que en position fermée de la platine les moyens élastiques exercent sur l'appareil nomade des forces concourantes appliquées en ses coins de sorte à ajuster la position de l'appareil nomade dans l'emplacement.

L'agencement comprend de plus un connecteur électrique adapté à l'appareil nomade de sorte que l'appareil puisse être électriquement rechargé et se trouver relié à un réseau électronique comprenant d'autres dispositifs électroniques. Le connecteur est agencé sur la platine de sorte que, en position ouverte le connecteur est à distance de l'appareil nomade et, en position fermée le connecteur est approché et complémentairement connecté à l'appareil nomade.

L'agencement comprend de plus un chemin de came contre lequel est en permanence sollicité un suiveur de came ledit chemin, réciproquement le suiveur, étant solidaire de la platine alors que le suiveur, réciproquement le chemin, est solidaire de l'équipement, le suiveur parcourant le chemin de came entre une première position atteinte lorsque la platine est en position ouverte et une seconde position atteinte lorsque la platine est en position fermée, le chemin de came étant pourvu d'au moins un cran de positionnement dans lequel le suiveur s'engage en position fermée de la platine de sorte à stabiliser ladite position fermée.

L'agencement comprend de plus un moyen de préhension solidaire de la platine de sorte qu'un utilisateur puisse déplacer manuellement la platine entre les positions ouverte et fermée.

L'agencement comprend de plus un moyen automatique, motorisé ou magnétique, de déplacement du dispositif de maintien.

L'agencement comprend de plus de plus un actionneur électrique commandant les déplacements du dispositif de maintien et du connecteur.

Les déplacements du dispositif de maintien et du connecteur sont commandés par le même actionneur qui est un moteur électrique pourvu de moyens de transmission reliant ledit moteur électrique, le dispositif de maintien et le connecteur de sorte que le dispositif de maintien et le connecteur sont entrainés de manière coordonnée et que donc en position rentrée du dispositif de maintien le connecteur est déconnecté et, en position sortie le connecteur est connecté.

L'agencement comprend de plus un moyen de commande de l'actionneur agencé de sorte qu'il soit alimenté lorsque le support mobile est en position enfoncée. Le moyen de commande comprend un capteur de position du support mobile. Le capteur de position est un contacteur électrique agencé au fond du logement et actionné par le support mobile lorsque celui-ci arrive en position enfoncé.

Le moyen de commande comprend de plus un détecteur de présence d'appareil nomade sur le support mobile de sorte que, en position libre du support mobile la présence d'un appareil nomade entraine le déplacement automatique du support mobile vers la position enfoncée.

L'agencement peut comprendre alternativement un moyen de transmission mécanique comprenant un second support mobile en translation selon l'axe principal agencé coopérant avec le premier support mobile, le second support mobile étant pourvu d'un emplacement dans lequel est agencé coulissant selon l'axe longitudinal le dispositif de maintien.

Le moyen de transmission mécanique comprend de plus un système bielle-manivelle transmettant et transformant les déplacements selon l'axe principal du second support mobile en déplacements longitudinaux du dispositif de maintien.

L'invention est également relative à un kit pour l'installation d'un appareil nomade d'un modèle particulier dans un équipement pourvu d'une façade de style et d'un agencement réalisé selon la revendication. Le kit comprend un adaptateur d'épaisseur pouvant s'agencer sur le support mobile, l'adaptateur d'épaisseur ayant les dimensions spécifiquement adaptées au modèle d'appareil nomade et un adaptateur périphérique pouvant être agencé et fixé dans l'ouverture du logement et étant lui-même pourvu d'une ouverture spécifique aux dimensions du modèle d'appareil nomade.

### BREVE DESCRIPTION DES DESSINS

D'autres caractéristiques, buts et avantages de l'invention apparaîtront à la lecture de la description détaillée qui suit, et en regard des dessins annexés, donnés à titre d'exemple non limitatif et sur lesquels:
La figure 1 est une vue générale de l'intérieure d'un véhicule, un appareil nomade type téléphone étant agencé dans un équipement lui-même agencé dans l'accoudoir central et, à titre d'exemple illustratif, un autre appareil nomade du type tablette est en façade de la console.
La figure 2 est un détail agrandit du bout de l'accoudoir de la figure 1, l'appareil nomade étant mis en place.
La figure 3 est similaire à la figure 2, l'appareil nomade étant retiré.
La figure 4 est une vue éclatée de l'agencement de la figure 1.
La figure 5 est une coupe de l'agencement de la figure 1 dans lequel est placé un premier modèle d'appareil nomade.
La figure 6 est similaire à la figure 5, l'appareil nomade étant retiré.
La figure 7 est une coupe similaire à la figure 5 mais spécifiquement adapté à un appareil nomade d'un second modèle plus mince et moins large que le premier modèle celui de la figure 3.
La figure 8 est similaire à la figure 7, l'appareil nomade étant retiré.
La figure 9 est le détail en perspective d'une came pourvue d'un chemin en coeur parcouru par un index, ces deux éléments étant représentés dans l'agencement de la figure 4.
Les figures 10 à 14 illustrent le fonctionnement de la came en coeur et de l'index de la figure 9.
Les figures 15 à 16 illustrent un mode de réalisation d'un dispositif de maintien et de connexion de l'appareil dans le logement.
Les figures 19 à 30 illustrent un mode de réalisation d'un dispositif motorisé de maintien et de connexion de l'appareil.
Les figures 31 à 34 illustrent un dispositif manuel de maintien et de connexion de l'appareil.

### DESCRIPTION DES MODES DE REALISATION PREFERES

Dans la suite de la description, des éléments identiques ou similaires seront désignés par les mêmes références.

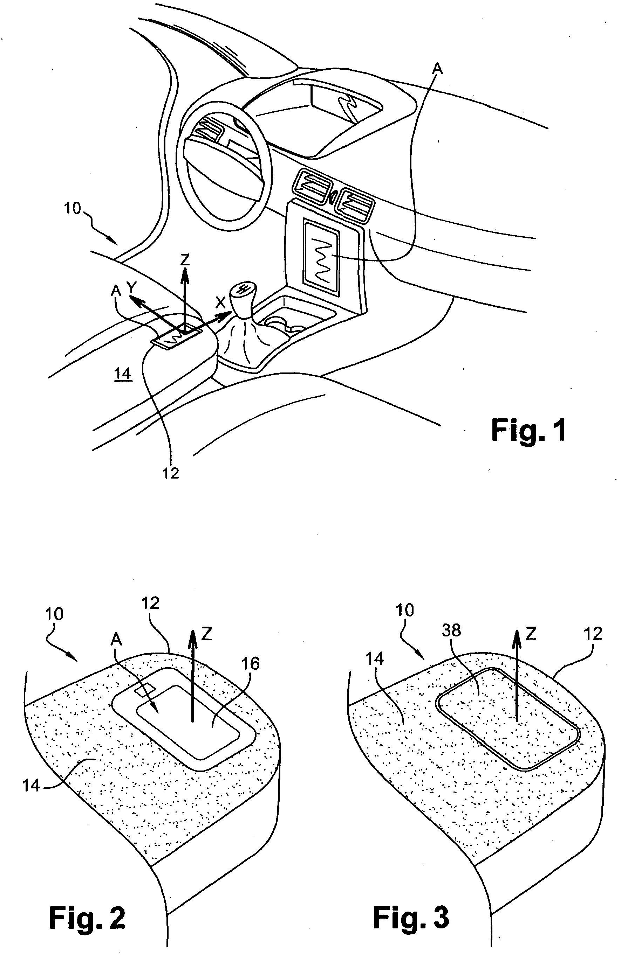

La figure 1 représente le poste de conduite d'une voiture dans l'accoudoir central duquel un agencement 10 permet l'intégration d'un appareil nomade A dans un équipement 12. L'appareil A est sensiblement rectangulaire et sa longueur est orientée selon un axe longitudinal X et la face-avant 16 est normale à l'axe principal Z. Un axe transversal Y complète le repère orthogonal, la largeur de l'appareil nomade étant alignée selon cet axe. À titre d'illustration, sur la figure un appareil nomade de plus grande taille, de type tablette électronique, est également mis en place dans une position quasi verticale. La description qui suit s'appuie sur celle de l'appareil horizontal mais une transposition à l'appareil vertical est immédiate.

L'objet de l'invention n'est pas non plus limité à l'environnement automobile et l'agencement 10 peut parfaitement convenir à un accoudoir de fauteuil de salon, au centre d'un volant, à un tableau de bord ou tout autre équipement, quel qu'il soit, pourvu qu'il dispose d'un emplacement où l'appareil nomade peut être installé.

Les appareils nomades sont conventionnellement parallélépipédiques rectangles à coins légèrement arrondis et, sans limiter l'invention à cette forme, elle sera prise à titre d'illustration de la description. Dans la description seront repérées la largeur La, plus petite dimension de la face-avant 16, la longueur Lg plus grande dimension de la face-avant 16 et l'épaisseur ep1 dimension de la face-avant 16 au dos de l'appareil A.

Enfin, toujours dans un souci de clarté et de simplification, une orientation de bas en haut selon l'axe principal Z sera adoptée. Ainsi, les termes « bas », « haut », « dessus », « dessous », « supérieur », « inférieur » ainsi que « horizontal » et « vertical » pourront servir la description sans pour autant limiter l'invention, notamment compte tenu des multiples possibilités d'intégration d'un appareil nomade dans un équipement.

Tel que représenté sur les figures 2 et 3 l'appareil A peut être orienté de diverses façon dans l'accoudoir de la figure 1, accoudoir qui est pourvu d'une façade de style 14.

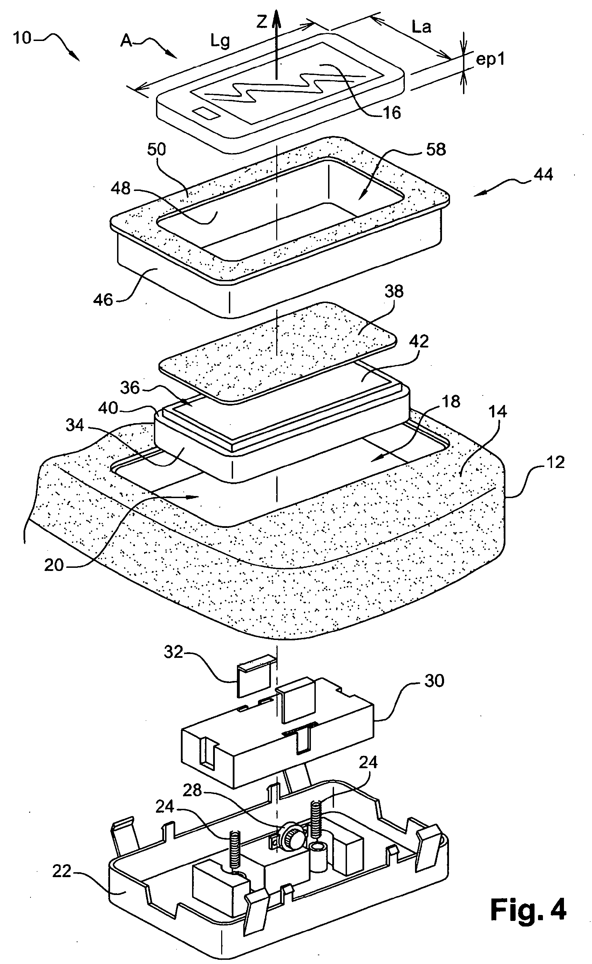

Les éléments de l'agencement 10 sont maintenant décrits en référence à la figure 4.

L'équipement 12 est pourvu d'une ouverture 18 rectangulaire donnant accès à un logement en creux 20. Les enseignements de l'invention peuvent évidemment être appliqués à toutes autres formes correspondant notamment un appareil circulaire, ovale ou autre.

Une embase 22 est fixée au fond du logement 20. L'embase 22 représentée peut être installée en la faisant passer par l'ouverture 18. Une fois au fond du logement 20, des languettes, quatre sur la figure 4, se détendent élastiquement depuis l'embase 22 et s'agencent dans des logements des parois périphériques du logement 20. D'autres dispositifs sont possibles telle une embase fixée par vis au fond du logement. L'embase 22 est équipée de deux ressorts de compression 24, d'un index 26 monté à l'extrémité d'un bras oscillant et d'un amortisseur 28. Alternativement d'autres moyens élastiques peuvent être utilisés.

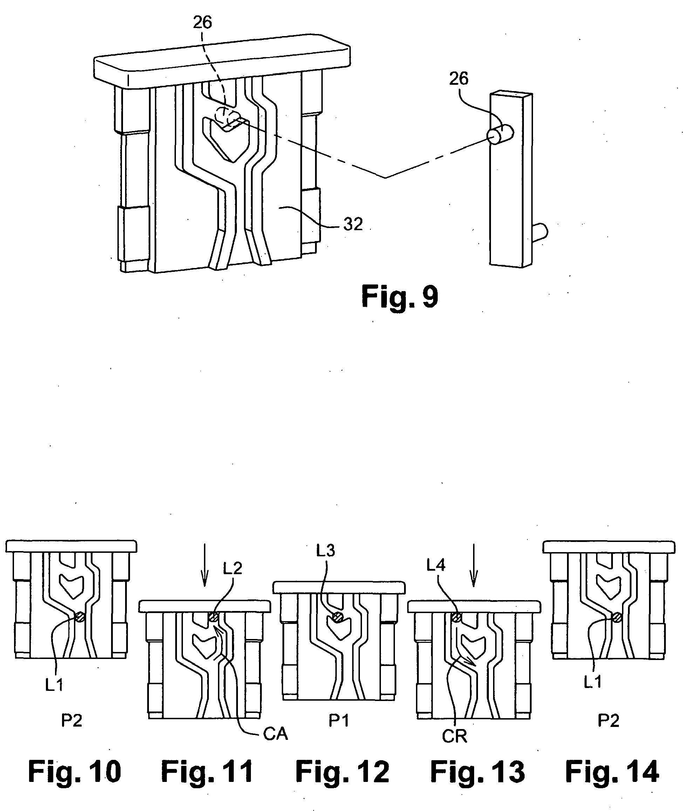

Un support mobile 30 lui-même pourvu d'une came 32 s'agence sur l'embase 22, comprime les ressorts 24 et coiffe l'amortisseur 28. Dans un mode de réalisation préféré mais non exclusif, la came 32 est une came définissant un chemin en forme de coeur dans lequel s'agence l'index 26. La came et l'index sont décrits plus en avant et illustrés par les figures 9 à 14. De plus sur la figure 4, le support mobile 30 et la came 32 sont deux pièces différentes mais, une fois assemblées elles sont solidaires. Une construction intégrale, venue de matière du support mobile et de la came est bien sûr possible.

Un adaptateur d'épaisseur 34 est agencé sur le support mobile 30. L'adaptateur d'épaisseur 34 a une paroi principale 36 d'épaisseur ep2 perpendiculairement bordée de parois latérales. Une fois en place l'adaptateur d'épaisseur 34 coiffe et recouvre le support mobile 30. La paroi principale 36 est rectangulaire, forme non limitative tel que précédemment expliqué, et est bordée d'un étroit pourtour 40 en léger retrait d'épaisseur par rapport à la zone centrale 42. La zone centrale 42 a les dimensions La x Lg de l'appareil nomade A qui doit être installé.

Un couvercle de style 38 rectangulaire et de faible épaisseur ep3, dont les dimensions principales La x Lg sont également celles de l'appareil A et de la zone centrale 42 est agencé et fixé sur la zone centrale 42 de l'adaptateur d'épaisseur 34.

Un adaptateur périphérique 44 est agencé et maintenu dans l'ouverture 18 du logement 20. L'adaptateur périphérique 44 a la forme d'une couronne rectangulaire dont les parois latérales externes 46 et les parois latérales internes 48 sont reliées par une face supérieure 50 horizontale débordant légèrement vers l'intérieur et l'extérieur. Les parois latérales externes 46 ont des dimensions appairées à celles de l'ouverture 18 de sorte qu'un engagement complémentaire des pièces soit réalisé. Les parois latérales internes 48 ont des dimensions appairées à celles de l'adaptateur d'épaisseur 34 de sorte que celui-ci puisse se déplacer sans heurt.

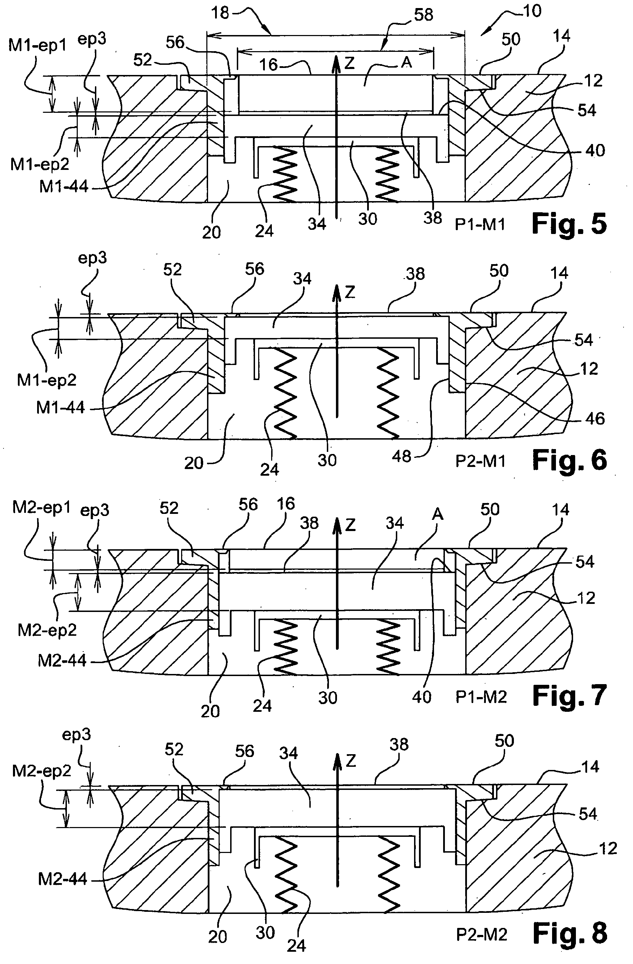

Plus facilement visible sur les figures 5 à 8, l'adaptateur périphérique 44 est mis en place dans l'ouverture 18 dans un agencement complémentaire. Le débordement extérieur 52 de la face supérieure 50 s'agence parfaitement dans un léger retrait 54 de la façade de style 14, léger retrait 54 bordant le tour de l'ouverture 18. Cet engagement complémentaire assure que l'adaptateur périphérique 44 se positionne exactement dans l'ouverture 18, la face supérieure 50 étant alors en continuité de surface avec la façade de style 14. De plus, l'adaptateur périphérique 44 et le débordement intérieur 56 de la face supérieure 50 restreignent l'ouverture 18 à une ouverture spécifique 58 dont les dimensions sont celles, La, Lg, de l'appareil nomade A, du couvercle de style 38 et de la zone centrale 42 de la paroi principale 36 de l'adaptateur d'épaisseur 34.

Le fonctionnement du système est maintenant décrit en références aux figures 5 à 8.

Les figures 5 et 6 représentent l'agencement 10 spécifiquement conçu pour un premier modèle M1 de smartphone A. Ce premier modèle M1 se distinguant d'un second modèle M2, choisi pour illustrer les figures 7 et 8, de par sa largeur et son épaisseur qui sont différentes. Le fonctionnement reste identique.

Sur ces figures est représenté le montage de l'adaptateur périphérique 44 dans l'ouverture 18 avec notamment l'agencement complémentaire du débordement extérieur 52 dans le léger retrait 54 de la façade de style 14. L'agencement 10 comprend l'empilement du couvercle de style 38, de l'adaptateur d'épaisseur 34, du support mobile 30, des ressorts de compression 24 et de l'embase 22. Ainsi monté le couvercle de style 38 l'adaptateur d'épaisseur 34 et le support mobile 30 peuvent de déplacer selon l'axe principal Z.

Les figures 5 et 7 correspondent à une position enfoncée P1. L'appareil nomade A est en place, les ressorts 24 sont comprimés et le support mobile 30 est près de l'embase 22.

Les figures 6 et 8 correspondent à une position libre P2. L'appareil nomade A est retiré, les ressorts 24 sont moins comprimés que précédemment et le support mobile 30 est éloigné de l'embase 22.

Dans les figures 5 et 7, l'appareil A est en place sur le couvercle de style 38. La face-avant 16 de l'appareil A affleure par l'ouverture spécifique 58 de l'adaptateur périphérique 44 et l'obture entièrement. La face-avant 16 est en continuité de surface avec la façade de style 14 de l'équipement 12 et avec la face supérieure 50 de l'adaptateur périphérique 44.

Dans les figures 6 et 8, l'appareil A est retiré. Le couvercle de style 38 affleure par l'ouverture spécifique 58 de l'adaptateur périphérique 44 et l'obture parfaitement. Il est en continuité de surface avec la façade de style 14 de l'équipement 12 et avec la face supérieure 50 de l'adaptateur périphérique 44.

Dans les figures 5 et 7, l'ensemble est maintenu en cette position enfoncée P1 par la came en coeur 32 et l'index 26. Ce type de mécanisme est connu et le fonctionnement est maintenant brièvement décrit en référence aux figures 9 à 14. D'autres arrangements existent pour figer les positions du support mobile 30.

La came 32 est pourvue un chemin en forme de coeur parcouru par l'index 26 de sorte que en position libre P2, l'index est à la pointe convexe L1 basse du coeur.

Pour mettre l'appareil nomade A en place, l'agencement étant en position libre P2 - figure 10 - un utilisateur place l'appareil A sur le couvercle de style 38 et appui sur la face-avant 16 dans le sens de la flèche sur la figure 11 selon l'axe principal Z. Le support mobile 30 et la came 32 se déplacent, l'index 26 parcoure alors un chemin aller CA passant par une première position zénithale L2, en haut d'un premier lobe du coeur. L'appareil A est alors entièrement entré dans le logement 20, sa face-avant 16 étant enfoncée par rapport à la façade de style 14. L'amortisseur 28 est placé sur l'embase dans le but d'éviter un choc brutal si l'utilisateur appui un peu fortement sur l'appareil A. Puis l'utilisateur relâche sa pression et, sollicité par les ressorts 24, le support mobile 30 remonte - figure 12 - l'index 26 poursuivant le chemin aller CA jusqu'à se loger dans la pointe concave inter-lobes L3 retenant alors le support mobile 30 en position enfoncée P1.

Pour retirer l'appareil A, un appui sur la face-avant 16, dans le sens de la flèche sur la figure 13 selon l'axe principal Z, enfonce à nouveau le support mobile 30, l'index 26 se déplace alors selon un chemin retour CR depuis la pointe concave inter-lobes L3 jusqu'à une seconde position zénithale L4, en haut du second lobe du coeur. L'appareil A est alors à nouveau entièrement entré dans le logement 20, sa face-avant 16 étant enfoncée par rapport à la façade de style 14. Ici également l'amortisseur 28 peu amoindrir l'effet d'un appui quelque peu brutal. Puis - figure 14 - l'utilisateur relâche la pression exercée et, sollicité par les ressorts 24, le support mobile 30 remonte jusqu'à ce que le pourtour 40 de l'adaptateur périphérique 34 vienne en butée sous le débordement intérieur 56 de la face supérieur 50 de l'adaptateur périphérique 44. L'index 26 a poursuivi le chemin retour CR jusqu'à revenir à nouveau dans la pointe convexe basse L1 du coeur. Le support mobile 30 est alors maintenu en position libre P2 et l'appareil A peut facilement être retiré.

Le modèle M1 de smartphones - figure 5 - est plus épais que le modèle M2 - figure 7. A chaque modèle correspond donc un adaptateur d'épaisseur 34 spécifique dont l'épaisseur ep2 compense celle de l'appareil ep1 et assure qu'en position enfoncée P1, la face-avant 16 est en continuité de surface avec la façade de style 14.

Similairement, le modèle M1 de smartphones - figure 5 - est moins large La que le modèle M2 - figure 7. A chaque modèle correspond donc un adaptateur périphérique 44 spécifique dont l'ouverture spécifique 58 correspond exactement aux dimensions de la face-avant 16 du modèle correspondant de sorte qu'en position enfoncée P1, la face-avant 16 de l'appareil A obture parfaitement l'ouverture spécifique 58.

En position libre P2, une continuité de surface entre la façade de style 14 et le couvercle de style 38 est souhaitée. Pour ce faire l'épaisseur du débordement intérieur 56 doit être égale à celle du couvercle de style 38. Alternativement, d'autres constructions peuvent être choisies en tenant compte de l'empilement des cotes de l'agencement.

En plusieurs endroits de cette description il est mentionné un engagement complémentaire de pièces qui ont des dimensions égales. Par exemple, la face-avant 16 ou le couvercle de style 38 obturent-ils l'ouverture spécifique 58. L'agencement dans l'accoudoir de la figure 1 positionne l'appareil nomade A de manière quasi-horizontale. L'appareil est alors naturellement maintenu en place dans le logement 20. Il demeure important d'éviter une extraction inopinée par exemple suite au passage sur une bosse de la route, un cassis ou un dos d'âne, un nid de poule ou quelque irrégularité que ce soit. Dans ce but, les dimensions de l'ouverture spécifique 58 sont ajustées de sorte que la face-avant 16 de l'appareil nomade A soit en léger coincement entre les débordements intérieurs 56. Par contre, le couvercle de style 38 étant fixé sur l'adaptateur d'épaisseur 34 il ne risque pas de sortie inopinée et alors ses dimensions propres sont choisies de sorte à maintenir un très léger jeu entre le couvercle de style 38 et l'ouverture spécifique 58.

L'homme du métier saura choisir les dimensions de sorte que le léger coincement et le léger jeu n'altèrent pas le bon fonctionnement de l'agencement.

Le léger coincement de la face-avant 16 dans l'ouverture spécifique 58 est un premier mode de réalisation d'un moyen de maintien 62 de l'appareil nomade A dans le logement 20. Dans le cas où ce premier mode ne serait pas considéré suffisant par exemple dans le cas d'une intégration verticale au centre du volant voire d'une intégration « tête en bas » avec la face-avant 16 orientée vers le bas, un moyen de maintien 62 additionnel peut être pourvu. Ce moyen de maintien 62 additionnel peut être réalisé selon divers modes notamment en utilisant la mise en place de l'appareil nomade et donc l'enfoncement du support mobile 30 pour actionner le basculement de patins de frottement latéraux venant s'agencer entre les parois latérales internes 48 de l'adaptateur périphériques 44 et les flancs de l'appareil nomade A. Le basculement des patins peut être remplacé par un coincement par compression réalisé au moyen de ressorts ou autres. Des brides peuvent également venir de refermer, telles les mâchoires d'une paire de pinces, sur les flancs de l'appareil nomade. Un dispositif peut encore être conçu pour ceinturer et retenir l'appareil. Quel qu'il soit, le moyen de maintien 62 additionnel ne doit pas être visible de l'utilisateur de sorte à conserver l'aspect de continuité des surfaces.

Egalement, la description ne précise pas que les dimensions de l'appareil nomade A comprennent les éventuels arrondis des coins. Ainsi l'ouverture spécifique 58 est-elle rectangulaire mais peut être pourvue de coins arrondis si le modèle d'appareil nomade est ainsi réalisé.

Le mode de construction le plus général a été décrit. Des modes alternatifs peuvent également être réalisés en suivant les enseignements de la présente invention.

Selon un deuxième mode de construction le couvercle de style 38 est réalisé venu de matière avec l'adaptateur d'épaisseur 34. Dans ce cas, en position libre P2, la paroi principale 36 de l'adaptateur d'épaisseur 34 affleure et est en continuité de surface avec la façade de style 14. Selon ce second mode de réalisation le remplacement de l'adaptateur d'épaisseur 34 est nécessaire pour adapter par exemple l'esthétique de l'agencement 10 à la façade de style 14.

Dans un troisième mode de construction spécifiquement conçu pour un seul modèle d'appareil nomade A, l'adaptateur d'épaisseur et l'adaptateur périphériques sont supprimés, le couvercle de style 38 est directement fixé sur le support mobile 30, voire venu de matière avec lui, l'ouverture 18 pratiquée dans la façade de style 14 a directement les dimensions spécifiques dudit modèle de smartphone.

Dans un quatrième mode de construction, similaire au premier mode, le plus général, l'adaptateur périphérique 44 peut être agencé dans l'ouverture selon deux directions orthogonales de sorte à placer le l'appareil A en position portrait ou en position paysage. Pour ce faire l'ouverture 18 du logement 20 peut être de section carrée, les parois latérales extérieures 46 de l'adaptateur périphériques 44 formant un carré complémentaire. L'ouverture spécifique 58 demeure un rectangle aux dimensions de la face-avant 16. Les autres adaptations notamment celles de l'adaptateur d'épaisseur 34 restent à la portée de l'homme du métier.

Dans un cinquième mode de construction, et dans le but d'un positionnement angulaire indifférent de la face-avant 16, l'ouverture 18 du logement 20 peut être circulaire et l'adaptateur périphérique 44 peut avoir des parois extérieures circulaires complémentaires alors que l'ouverture spécifique 58 demeure un rectangle aux dimensions de la face-avant 16 de l'appareil A. Les autres adaptations notamment celles de l'adaptateur d'épaisseur 34 restent à la portée de l'homme du métier.

L'adaptateur d'épaisseur, l'adaptateur périphériques et couvercle de style, qui sont des pièces spécifiques à un modèle donné d'appareil nomade A, peuvent faire l'objet de kits spécifiques fourni séparément. Lors d'un changement de appareil A il suffit alors pour intégrer le nouvel appareil dans l'équipement 12 de se procurer un kit correspondant au nouvel appareil et de ne remplacer que l'adaptateur d'épaisseur 34, l'adaptateur périphérique 44 et le couvercle de style 38. De même, le couvercle de style peut être fourni seul dans un kit séparé de sorte à remplacer un couvercle usé ou bien à adapter l'agencement 10 à une nouvelle façade de style 14.

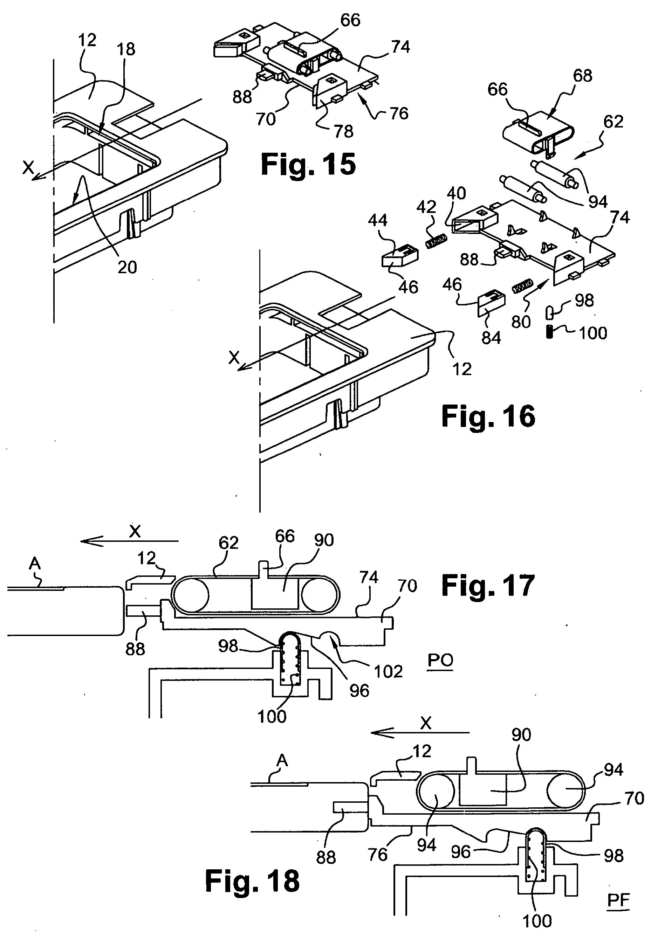

Un mode de réalisation d'un dispositif de maintien 62 est maintenant décrit en référence aux figures 15 à 18. Le dispositif 62 est manuellement actionné au moyen d'une languette 66 affleurant verticalement juste au-dessus d'un autre moyen de camouflage 68 décrit ci-après.

Le dispositif de maintien 62 comprend une platine 70 plane et sensiblement rectangulaire, son grand côté 72 étant de la dimension de la largeur de l'appareil nomade A. La platine 70 est horizontalement agencée et est déplaçable en translation selon l'axe longitudinal X. La languette 66 est solidaire de la platine 70 et s'en étend perpendiculairement. Dans les deux coins 78 de la platine 70 situés au plus près de l'appareil nomade A, la platine 70 est pourvue de deux logements 80 dans chacun desquels est agencé un ressort 82 comprimé sollicitant longitudinalement X un patin biseauté 84 en forme de trapèze-rectangle, les deux côtés en biais 86 des patins 84 étant orientés de sorte à être appliqués dans les coins arrondis de l'appareil nomade A. Alternativement, on pourrait agencer un ressort à lame profilé qui, en approchant la platine serait au contact de l'appareil nomade A ou encore un joint caoutchouc.

Au centre du grand côté 72 de la platine 70 se trouvant au plus près de l'appareil nomade A est agencé un connecteur électrique 88 mâle. Ce connecteur 88 ayant pour objet de s'engager dans le connecteur femelle de l'appareil nomade A, il va de soi que la forme et l'emplacement même sur la platine 70 du connecteur mâle 88 est fonction du modèle d'appareil nomade A choisi et, dans le cas d'un appareil nomade A dont le connecteur femelle serait décentré, le connecteur mâle 88 correspondant serait agencé en correspondance sur le côté de la platine 70. Le connecteur électrique 88 est lui-même relié au moyen d'un câble, non représenté, au circuit d'alimentation et au réseau informatique du véhicule de sorte à assurer la liaison de l'appareil nomade A tant pour la recharge électrique que pour l'accès à l'ensemble des fonctionnalités.

Enfin, au centre de la platine 70 est agencé la languette 66 ainsi que ledit autre moyen de camouflage 68. La languette 66 est partie à un bloc parallélépipédique 90 s'étendant transversalement Y pour se fixer à la platine 70 au moyen de deux pates terminées en ergot s'engageant dans des ouvertures complémentaires de la platine 70. Entre la platine 70 et le bloc 90 est ménagé un mince passage dans lequel passe un ruban 92 fermé et tendu entre deux rouleaux 94 solidaires de l'agencement 10 et tournant selon l'axe transversal Y. Le ruban 92 est pourvu d'une petite fente au travers de laquelle affleure la languette 66. Ainsi agencé, un utilisateur peut déplacer la platine 70 en agissant sur la languette 66 de sorte que lorsqu'un utilisateur pousse la languette 66, le ruban 92 tourne autour des rouleaux 94, le bloc 90 se déplace et entraine la platine 70. En tournant le ruban 92 camoufle en permanence l'ouverture nécessaire au déplacement de ladite languette 66. D'autres moyens peuvent être développés par exemple en supprimant la languette et en agissant directement sur le ruban. Celui-ci, sous la pression exercée par l'utilisateur, se déforme légèrement et vient au contact du bloc parallélépipédique 90 qui se déplace et entraîne la platine 70. De manière similaire, le ruban peut être collé, ou fixé d'une manière quelconque à la face supérieure du bloc de sorte que sans déformation l'entrainement du ruban déplace le bloc 90 et la platine 70.

Particulièrement visible sur les figures 17 et 18, la platine 70 est pourvue sur sa face inférieure 76 d'un chemin de came 96 contre lequel est sollicité un index suiveur 98 poussé par un ressort vertical 100. Alternativement un autre dispositif similaire peut être utilisé en remplaçant l'index par une bille ou un ressort à lame par exemple. Le chemin de came 96 est de plus pourvu à une extrémité d'un cran de fermeture 102. Ainsi agencé, lorsque la platine 70 est en position ouverte PO - figure 17 - elle est éloignée de l'appareil nomade A, le connecteur électrique 88 est dégagé de l'appareil A et l'index suiveur 98 est en bout du chemin de came 96. Pour déplacer la platine 70 au moyen de la languette 66, l'utilisateur doit pousser la languette selon l'axe longitudinal X de sorte que le chemin de came 96 se déplace et est parcouru par l'index suiveur 98. En fin de course la platine 70 approchant de la position fermée PF, le connecteur électrique 88 s'engage complémentairement dans le connecteur de l'appareil A, les patins biseautés 84 viennent au contact des angles arrondis de l'appareil A et appuient de sorte à le coincer dans son logement 20 et l'index suiveur se loge dans le cran de fermeture 102 fixant ainsi ladite position de fermeture. De plus en s'engageant dans le cran 102 l'index 98 transmet à l'utilisateur un léger effort à la foi agréable et assurant l'utilisateur que la connexion a bien été opérée. Tel que représenté sur les figures 17 et 18, le chemin de came 96 peut être profilé de sorte que l'utilisateur ressente un effort ainsi, le chemin de came 96 est incliné de sorte que dans le sens de la fermeture l'utilisateur ait à vaincre un effort croissant suivi d'un léger « clic » lors de l'engagement de l'index 98 dans le cran 102 et, dans le sens de l'ouverture, au contraire l'utilisateur n'ai à fournir que l'effort nécessaire au dégagement de l'index 98 du cran 102, l'action de l'index 98 sur le chemin de came 96 étant ensuite moteur jusqu'à ce que la platine soit en position ouverte PO. De plus non représenté, le chemin de came peut être pourvu d'un cran d'ouverture dans lequel s'engage l'index 98 en position ouverte PO de la platine 70.

Le profil du chemin de came 96 et les crans d'ouverture et de fermeture ont des rôles complémentaires. Il est utile que les positions ouverte PO et fermée PF soient des positions stables. Selon les figures 17 et 18, cette stabilité est apportée en position fermée PF par l'engagement de l'index 98 dans le cran de fermeture 102 et, en position ouverte PO d'une part par la fin du chemin de came 96 contre laquelle l'index 98 vient en butée et d'autre part par la pente du chemin de came 96. À l'instar de la position ouverte PO on pourrait dessiner un chemin de came en V, selon un V très ouvert et arrondi, terminé par deux butées telles que en ouverture sur les figures 17 et 18.

Le moyen manuel de déplacement décrit ci-avant peut être remplacé par un moyen automatique par exemple motorisé ou magnétique.

Le kit 60 ci-dessus décrit peut également comprendre le dispositif de maintien et de connexion ci-avant décrit.

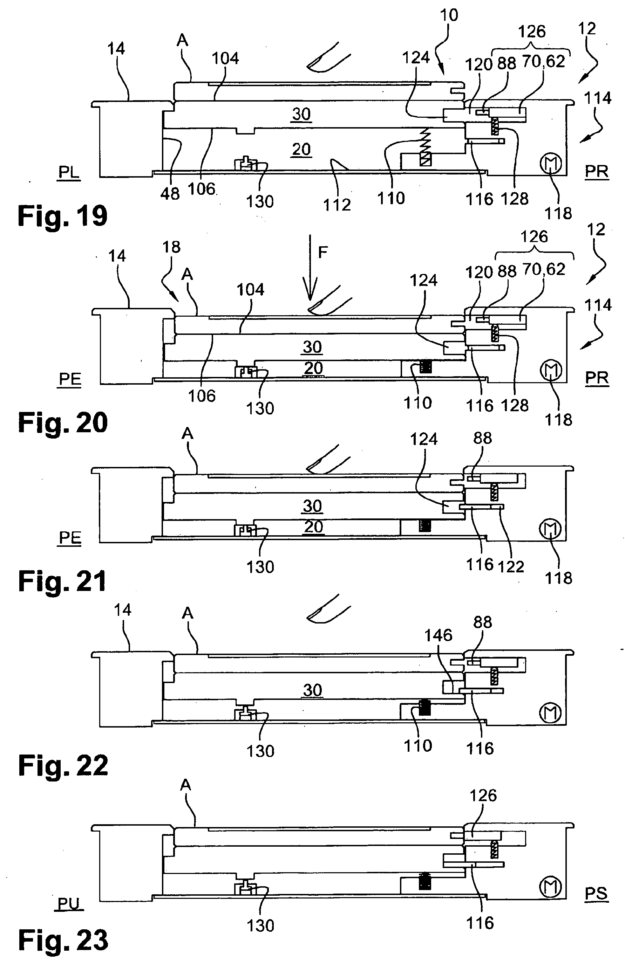

Un mode de réalisation particulier d'un dispositif motorisé est maintenant décrit en référence aux figures 19 à 30.

Selon ce mode, l'équipement 12 est pourvu d'une façade de style 14 coordonnée avec l'accoudoir. L'ouverture 18 de l'équipement 12 donne accès au logement 20 parallélépipédique dans lequel l'appareil nomade A peut être placé. Le support mobile 30 est agencé dans le logement 20 et peut s'y déplacer verticalement Z entre une position libre PL, tel que sur la figure 19, position dans laquelle sa face supérieure 104 affleure par l'ouverture 18, l'appareil nomade A étant juste posé sur la face supérieure 104, et une position enfoncée PE - figure 20. Le support mobile 30 est lui-même parallélépipédique, il comprend la face supérieure 104 dont les dimensions sont sensiblement celles de l'ouverture 18, une face inférieure 106 opposée, les faces 104, 106, étant reliées par quatre parois latérales 108. Un ressort 110, ou alternativement tout autre moyen élastique, agencé entre la face inférieure 106 et le fond 112 du logement 20 sollicite en permanence le support mobile vers la position libre PL. Dans le mode de réalisation décrit, le ressort 110 est maintenu en place au moyen d'un emplacement creux pourvu dans le fond du logement. Le support mobile 30 est de plus pourvu d'une encoche de verrouillage 128 s'étendant transversalement Y dans l'épaisseur même de la paroi latérale 108 transversale représentée à droite dans la figure 19. La paroi latérale opposée, la paroi « gauche » de la figure 19, est pourvue dans sa partie basse d'une extension qui permet un engagement complémentaire avec un rebord de l'ouverture 18. Cet engagement permet qu'en position libre PL le support mobile 30 vienne en butée contre ledit rebord et, bien que sollicité verticalement Z par le ressort 110, il s'immobile la face supérieure 104 affleurant par l'ouverture 18.

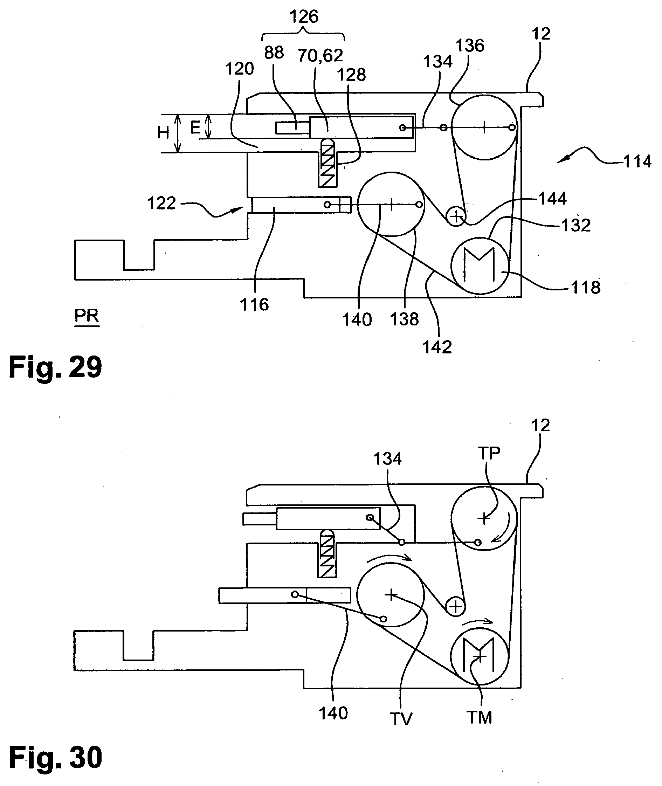

Au voisinage de la largeur droite du logement 20, l'équipement 12 est pourvu d'un espace de commande 114 dans lequel est agencée la platine 70 telle que décrite par avant, équipée du dispositif de maintien 62 et du connecteur électrique 88 adapté au modèle d'appareil nomade A. De plus, un verrou de positionnement 116, un moteur électrique 118 ainsi qu'un moyen de transmission qui sera détaillé plus avant en référence aux figures 29 et 30.

Tel que présenté sur la figure 19, l'équipement 12 comprend dans l'espace de commande 114 un logement haut 120 dans lequel sont agencés le dispositif de maintien 62 et le connecteur électrique 88 et, un logement bas 122 dans lequel est agencé le verrou 116. Lorsque le support mobile 30 est en position libre PL - figure 19 - le logement haut 120 fait face à l'encoche de verrouillage 124 qui ont tous deux la même hauteur H, hauteur mesurée selon l'axe vertical Z.

Dans le logement haut 120, le dispositif de maintien 62 et le connecteur 88 sont solidaires de la platine 70 formant ainsi ensemble une platine équipée 126 dont l'épaisseur E mesurée selon la verticale Z est nettement inférieure à la hauteur H du logement haut 120. Un autre ressort 128 équipé d'un embout facilitant les glissements et déplacements relatifs est agencé sous la platine équipée 126 et la sollicite verticalement Z en permanence vers le haut du logement haut 120 qui sera également dénommé le « plafond » du logement haut 120.

Tel que cela sera décrit plus avant, la platine équipée 126 est mobile dans le logement haut 120 et peut être déplacée longitudinalement X et verticalement Z.

Le verrou 116 pour sa part est ajusté glissant en épaisseur au logement bas 122 et ne peut s'y déplacer que selon l'axe longitudinal X.

En position libre PL du support mobile 30, telle que selon la figure 19, la platine équipée 126 est en une position rentrée PR entièrement à l'intérieur et en haut du logement haut 120. Le verrou 116 est également en position rentrée PR entièrement à l'intérieur du logement bas. Tel que cela peut être observé sur la figure 19, le verrou 116 affleure avec la paroi droite du logement 20 alors que la platine équipée 126 est en retrait de ladite paroi. De manière imagée, le verrou 116 est dit plus « avancé » que la platine équipée 126.

Les déplacements longitudinaux X de la platine équipée 126 et du verrou 116 sont motorisés par le moteur électrique 118 qui dispose d'un moyen de commande comprenant entre autre un contacteur électrique 130. Dans le mode de réalisation de la figure 19, le contacteur 130 est agencé sur une carte électronique placée au fond du logement 20 de sorte que lorsque le support mobile 30 descend verticalement Z jusqu'en position enfoncée PE, sa face inférieure 106 vient actionner le contacteur 130 qui commute électriquement.

Les étapes de la mise en place sont maintenant décrites en référence aux figures 19 à 23.

Selon la figure 19, l'appareil nomade A est placé sur la face supérieure 104 du support mobile 30 qui est en position libre PL. Ladite face supérieure 104 verticalement poussée vers le haut par le ressort 110 affleure avec la façade de style 14. L'appareil nomade A est donc en dehors du logement 20. L'encoche de verrouillage 124 fait face au logement haut 120. La platine équipée 126 et le verrou 116 sont tous deux en position rentrée PR à l'intérieur de leurs logements respectifs. En particuliers, la platine équipée 126, verticalement sollicitée par l'autre ressort 128, est en haut « au plafond » du logement haut 120.

Selon la figure 20, le doigt qui s'approchait préalablement est maintenant en contact avec l'appareil A et appui dans le sens de la flèche F de sorte à faire entrer l'appareil A dans le logement 20. La face inférieure 106 du support mobile 30 contacte alors le contacteur électrique 130 qui commute. Le support mobile 30 est en position enfoncée PE. La platine équipée 126 et le verrou 116 demeurent en position rentrée PR. L'encoche de verrouillage 124 est descendue et fait face au verrou 116. Le contacteur 130 étant appuyé le moteur 118 reçoit l'information correspondante et se met à tourner.

Selon la figure 21 le moteur 118 alimenté, depuis que le contacteur 130 a été commuté, s'est mis en rotation de sorte que la platine équipée 126 et le verrou 116 ont tous deux commencé à avancer longitudinalement X. Le verrou 116 étant un peu plus en avant que la platine équipée 126, le verrou 116 s'engage dans l'encoche de verrouillage 124 dès le début du déplacement longitudinal X alors que la platine équipée 126 est encore entièrement dans le logement haut 120. L'expression « plus en avant » est interprétée dans le sens où le verrou 116 est plus proche du support mobile 30 que ne l'est la platine 126. A ce point de l'engagement du verrou 116 le moteur 118 s'arrête et marque une pause et, selon la figure 22, l'utilisateur cessant son action sur l'appareil A, celui-ci remonte légèrement verticalement Z sous l'effet du ressort 110 mais, le verrou 116 étant partiellement engagé dans l'encoche de verrouillage 124, il entre en contact avec la paroi basse 146 de ladite encoche 124 et retient alors le support mobile 30 de sorte que sa face inférieure 106 n'est plus en contact avec le contacteur 130 et l'écran de l'appareil nomade A affleure par l'ouverture 18. Dans cette position, le connecteur 88 est face au connecteur femelle de l'appareil nomade A et, le support mobile 30 n'appuie plus sur le contacteur 130 qui commute à nouveau et, selon la figure 23, le support mobile 30 étant maintenant retenu par le verrou 116, le moteur 118 se remet à tourner et la platine équipée 126 ainsi que le verrou 116 poursuivent leur déplacement longitudinal X. Le verrou 116 poursuit ainsi son engagement complet dans l'encoche de verrouillage 124 et la platine équipée 126, toujours au « plafond » du logement haut 120, poursuit son engagement dans l'appareil A de sorte que le connecteur mâle 88 s'enfiche dans le connecteur femelle de l'appareil nomade A, qui se trouve ainsi connecté tant pour la recharge électrique de ses batteries que pour une liaison avec le réseau électronique du véhicule. La platine équipée 126 et le verrou 116 sont en position sortie PS. La position de la figure 23 est la position d'utilisation PU de l'appareil nomade A installé dans l'équipement 12.

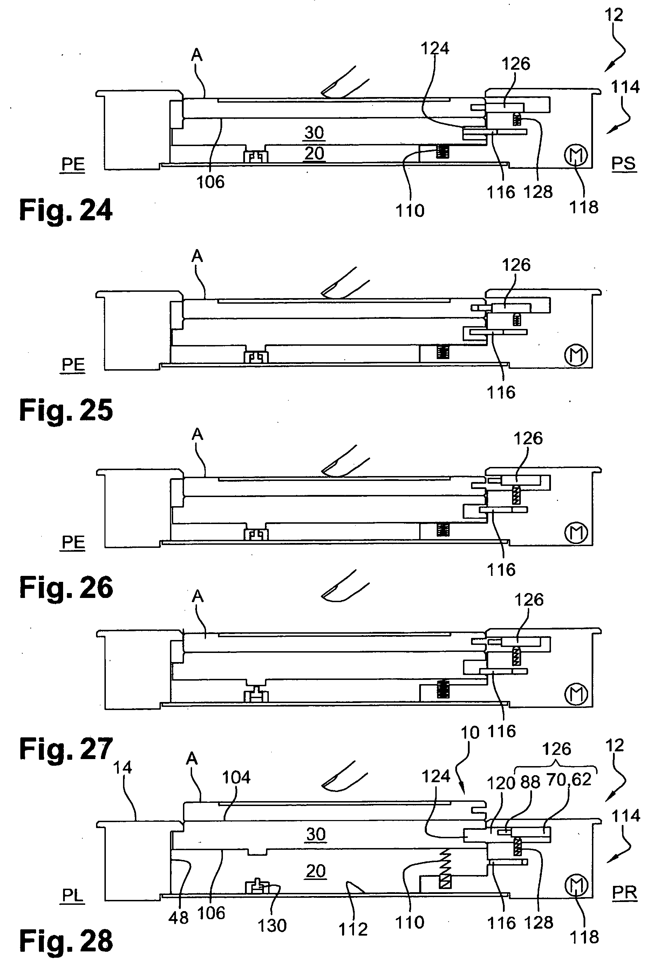

Les figures 24 à 28 illustrent les étapes suivies pour retirer l'appareil nomade A de l'équipement 12.

Selon la figure 24, l'utilisateur appui à nouveau sur l'appareil nomade A, ce qui a pour effet d'enfoncer verticalement Z l'appareil A et le support mobile 30 jusqu'à ce que la face inférieure 106 du support mobile 30 appuie sur le contacteur 130 et le fasse commuter tout en comprimant le ressort 110 ce qui correspond à revenir à la position enfoncée PE. Ce déplacement vertical Z a également entrainé la platine équipée 126 dont le connecteur 88 est toujours enfiché dans l'appareil A. Ce faisant la platine 126 s'est éloignée du plafond du logement haut 120 et a comprimé l'autre ressort 128. Le verrou 116 est pour sa part sensiblement au milieu de l'encoche de verrouillage 124. Le contacteur 130 ayant commuté, le moteur électrique 118 est à nouveau alimenté et se met à tourner en sens inverse que précédemment. Il sera indiqué plus avant que dans la configuration des figures 29 et 30 le moteur 118 pourrait tourner en permanence dans le même sens, sans s'inverser.

Selon le figure 25 le support mobile est toujours en position enfoncée PE mais la platine équipée 126 et le verrou 116 ont commencé à se retirer. Le connecteur 88 n'est plus que partiellement engagé dans l'appareil A et la platine équipée 126 se trouve entièrement à l'intérieur du logement haut 120, tout en étant toujours à proximité voire au contact, de la surface basse du logement haut 12. Le verrou 116 n'est quant à lui que partiellement reculé.

La figure 26 succède à la figure 25 et le connecteur 88 est maintenant entièrement dégagé de l'appareil A. Sous le seul effet de l'autre ressort 128, la platine 126 s'est déplacée verticalement Z du sol au plafond du logement haut 120.

Selon la figure 27, l'utilisateur n'appuie plus sur l'appareil A, le moteur électrique 118 toujours alimenté poursuit le retrait du verrou 116 ainsi que le recul complet de la platine équipée 126. Tant que le verrou 116 reste, même partiellement, engagé dans l'encoche de verrouillage 124 il retient le support mobile 30.

Selon la figure 28, identique à la figure 19, le verrou 116 est entièrement dégagé de l'encoche de verrouillage 124. Le support mobile 30 n'est plus soumis qu'à l'effort du ressort 110 qui agit verticalement Z sur sa face inférieure 106 et qui le fait remonter jusqu'à retrouver la position libre PL de la figure 19, position dans laquelle l'appareil A peut être retiré.

La motorisation de l'équipement 12 est maintenant décrite en référence aux figures 29 et 30. Le moteur électrique 118 est solidaire de l'équipement 12. C'est un moteur rotatif dont l'axe central TM est transversal Y et entraine directement une poulie meneuse 132 ainsi qu'une première poulie menée 136 d'axe transversal TP, agencée en arrière du logement haut 120 et, une seconde poulie menée 138 de même diamètre que la première poulie menée 136, d'axe transversal TV, agencée en arrière du logement bas 122. L'expression « en arrière » désigne ici une position longitudinalement « à droite » dans le sens de la figure 29. Une courroie 142 entraine les poulies selon le même sens de rotation, sans que cela soit une obligation. De plus, la courroie 142 est maintenue en tension par un galet tendeur 144.

La première poulie menée 136 entraine la platine 126 au moyen d'un premier système bielle-manivelle 134. La bielle est liée pivotante à la platine équipée 126 et la manivelle est liée pivotante à la poulie 136. Le système 134 est agencé de sorte qu'en position rentrée PR de la platine équipée 126, la bielle et la manivelle soient alignées selon l'axe longitudinal X, le pivot d'ancrage de la manivelle sur la poulie 136 étant le plus en arrière possible et, en position sortie PS de la platine 126 la bielle et la manivelle soient encore alignées selon l'axe longitudinal X, le pivot d'ancrage de la manivelle sur la poulie 136 étant le plus en avant possible. Ainsi un demi-tour de la poulie menée 136 correspond au déplacement longitudinal X de la platine équipée 126 parcouru entre les positions rentrée PR et sortie PS.

La seconde poulie menée 138 entraine le verrou 116 au moyen d'une simple manivelle 140. La manivelle est liée pivotante à chacune de ses extrémités d'un côté à la poulie 138 et de l'autre au verrou 116. La manivelle 104 est agencée de sorte qu'en position rentrée PR du verrou 116, elle est alignée selon l'axe longitudinal X, le pivot d'ancrage de la manivelle sur la poulie 138 étant le plus en arrière possible et, en position sortie PS du verrou 116 la manivelle est à nouveau alignée selon l'axe longitudinal X, le pivot d'ancrage de la manivelle sur la poulie 138 étant le plus en avant possible. Ainsi un demi-tour de la seconde poulie menée 138 correspond au déplacement longitudinal X du verrou 116 parcouru entre les positions rentrée PR et sortie PS. Il apparait ici que les allers retours de la platine équipée 126 et du verrou 116 peuvent faire suite à des demi-tours du moteur 118, que ces demi-tours se fassent par inversion du sens de rotation ou en poursuivant dans le même sens de rotation. La figure 29 représente le dispositif en position rentrée PR, alors que la figure 30 le représente en une position intermédiaire telle que dans les figures 21, 22, 26 et 27, position dans laquelle le connecteur 88 est dégagé du l'appareil A alors que le verrou 116 est partiellement engagé dans l'encoche de verrouillage 124.

Les poulies menées 136, 138 ainsi que leur mécanisme bielle-manivelle 134, et manivelle 140, doivent permettre des déplacements longitudinaux de la platine équipée 126 et du verrou 116 simultanés et de même longueur. Dans les figures un mode est représenté dans lequel les poulies sont identiques et les pivots d'accrochage des bielles sont pareillement excentrées. De multiples alternatives à ce dispositif de motorisation et de transmission de mouvement peuvent être mise en oeuvre, par exemple en remplaçant le moteur rotatif par des moteurs linéaires ou des électroaimants, les moteurs étant en prise directe avec la platine et de verrou.

Le kit 60 peut facilement être augmenté des moyens motorisés tels que décrit. Ces moyens peuvent également faire l'objet de kit séparés.

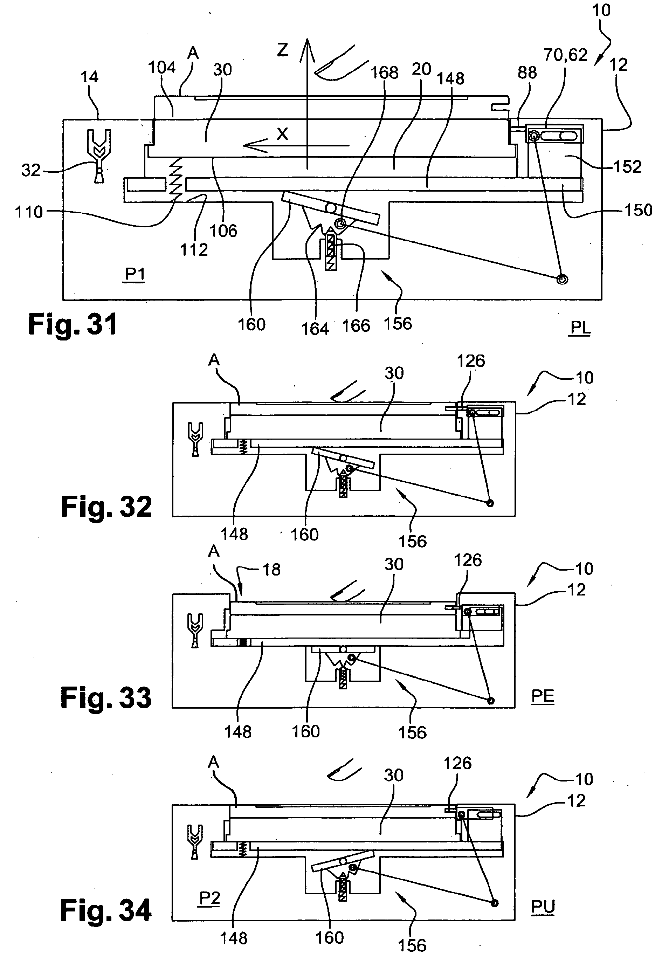

Dans un autre mode dé réalisation maintenant présenté, l'appareil A peut être mis en place, maintenu et connecté au moyen d'un dispositif mécanique maintenant décrit en référence à la figure 31. Selon ce mode, le support mobile 30 est agencé dans le logement 20 et peut s'y déplacer verticalement Z entre une position libre PL, tel que sur la figure 31, position dans laquelle sa face supérieure 104 affleure par l'ouverture 18, l'appareil nomade A étant juste posé sur la face supérieure 104, et une position enfoncée PE - figure 33. Le ressort 110, ou alternativement tout autre moyen élastique, agencé entre la face inférieure 106 et le fond 112 du logement 30 sollicite en permanence le support mobile 30 vers la position libre PL. Dans un mode de réalisation particuliers, le ressort 110 peut être maintenu en place dans un emplacement creux non représenté pourvu dans le fond 112 du logement. Les parois latérales 108 forment un épaulement qui permet un engagement complémentaire avec un rebord de l'ouverture 18. Cet engagement permet qu'en position libre PL l'épaulement vienne en butée contre ledit rebord et, bien que sollicité verticalement Z par le ressort 110, le support mobile 30 s'immobile la face supérieure 104 affleurant par l'ouverture 18.

L'équipement 12 est de plus pourvu d'un second support mobile 148 agencé sous le premier support mobile 30, entre la face inférieure 106 du premier support mobile 30 et le fond 112 du logement. Le second support mobile 148 comprend une partie horizontale 150 plane qui s'étend parallèlement au premier support mobile 30 et un retour vertical 152 qui forme un bloc parallélépipédique agencé de sorte à être sur le côté de l'appareil A pourvu d'un connecteur femelle. Sur la figure 31 ce retour vertical 152 est sur la largeur située à droite de la partie horizontale 150. La partie horizontale 150 est pourvue d'un trou au travers duquel s'étend le ressort 110 et, le retour vertical 152 est lui-même pourvu d'un espace 154 creux dans lequel est agencé une platine 126 équipée décrite par avant.

Les translations selon l'axe principal Z de l'appareil A et du premier support mobile 30 sont transformées en translations longitudinales X de la platine équipée 126 au moyen d'un mécanisme 156 de transmission comprenant le second support mobile 148, un plateau basculant 160 et un dispositif bielle-manivelle décrit ci-dessous.

Sous le second support mobile 148 est agencé, dans une cavité 158 pratiquée dans le fond 112 du logement, un plateau 160 basculant autour de l'axe transversal Y. Le plateau 160 est pourvu d'une came 162 dont le profil en demi-cercle a deux crans 164. La came 162 est suivie par un index 166 en permanence sollicité par un ressort, ou tout autre moyen élastique, contre le profil de la came 162. Lorsque l'index 166 se loge dans l'un des deux crans 164 cela définit une position stable du plateau 160. Les deux positions stables P1 et P2 du plateau 160 sont des positions inclinées symétriques l'une de l'autre dans lesquelles le plateau 160 n'est pas parallèle au fond 112 du logement, un bord du plateau étant en contact avec le dessous du second support mobile 148. En un point excentré 168 du corps de la came 162 est montée pivotante une des extrémités d'une manivelle 170 qui s'étend jusqu'à une autre extrémité en liaison pivot avec une bielle 172 qui s'étend quant à elle jusqu'à une extrémité elle-même liée en liaison pivot à la platine équipée 126. Les trois liaisons pivots se font selon l'axe transversal Y.

Alternativement et comme cela a par ailleurs été décrit, plutôt que d'être exactement réalisé aux dimensions d'un appareil A donné, l'équipement 12 peut être réalisé plus grand de sorte à accommoder plusieurs modèles d'appareil A et être pourvu d'un adaptateur spécifique comprenant un adaptateur périphérique et éventuellement un adaptateur d'épaisseur.

De plus, tel que cela est schématisé sur la gauche de la figure et sans que cela soit pour autant son véritable emplacement, le premier support mobile 30 est pourvu de la came en coeur 32 suivie par un index mobile telle que décrite par avant.

Les étapes de la mise en place de l'appareil A sont maintenant décrites.

Selon la figure 31, l'équipement 12 est en position libre PL la face supérieure 104 du support mobile 30 affleurant par l'ouverture 18. L'appareil A est placé sur le support mobile 30 et se trouve alors entièrement à l'extérieur du logement 20. Le second support mobile 148 est maintenu en une position haute intermédiaire, à la fois à distance de la face inférieure 106 du premier support mobile 30 et également à distance du fond 112 du logement 20. Le plateau basculant 160 est en première position stable P1 inclinée vers la droite de la figure et repousse ainsi vers le haut le second support mobile 148. La position stable est assurée par l'index 166 dont l'embout est logé dans un cran 164 de la came 162. La manivelle 170 et la bielle 172 maintiennent la platine équipée 126 entièrement rentrée dans l'espace 154.

Selon la figure 32 un utilisateur appui sur l'appareil A et l'enfonce jusqu'à ce que le premier support mobile 30 ait suffisamment comprimé le ressort 110 et que la face inférieure 106 du premier support mobile 30 soit en contact avec le second support mobile 148. A ce point de l'enfoncement du premier support mobile 30, le connecteur 88 se trouve exactement en face du connecteur femelle de l'appareil A. Pendant cette première phase de l'enfoncement de l'appareil A le second support mobile 148, la platine équipée 126 et le mécanisme de transmission 156 n'ont pas bougé.

Selon la figure 33, en continuant d'appuyer et sans interrompre le mouvement d'enfoncement de l'appareil A, le premier support mobile 30 repousse le second support mobile 148 jusqu'à ce que celui-ci soit en contact avec le fond du logement 112. Dans cette étape de déplacement, le second support mobile 148 entraine vers le bas le retour verticale 152 et donc la platine équipée 126 et, dans ce mouvement le connecteur 88 reste aligné au connecteur de l'appareil A. En s'approchant du fond 112 du logement, le second support mobile 148 oblige le plateau 160 à pivoter jusqu'à ce trouver en position horizontale - figure 33 - en appui surfacique contre le second support mobile 148. Dans cette position horizontale l'index 166 se trouve entre les deux crans 164 sur un sommet du profil de la came ce qui rend cette position instable. Ce mouvement de bascule du plateau 160 a entrainé un déplacement de la manivelle 170 et de la bielle 172 qui a déplacée longitudinalement X la platine équipée 126. Se faisant le connecteur mâle 88 s'est enfiché dans l'appareil A et, tel que montré sur la figure 33, le connecteur 88 est environ à moitié enfiché.

Selon la figure 34, l'utilisateur relâchant son appui sur l'appareil A, celui-ci remonte, le premier support mobile 30 n'étant plus soumis qu'à la force verticale du ressort 110. Sollicité par l'index 166, le plateau 160 continu de basculer dans le même sens jusqu'à retrouver l'autre position stable P2 dans laquelle l'index 166 est dans l'autre cran 164. Cette seconde partie du basculement du plateau 160 a continué de déplacer le connecteur électrique 88 qui s'est entièrement inséré dans l'appareil A. Au terme de ce déplacement vers le haut, l'appareil A s'immobilise en affleurant par l'ouverture 18 et se trouve en position d'utilisation PU.

Pour enlever l'appareil A il suffit d'appuyer à nouveau sur l'appareil A, ce qui l'enfonce à nouveau et fait basculer le plateau 160, cette fois selon l'autre sens de rotation, le sens horaire dans le sens des figures. Cette rotation est transformée par la bielle et la manivelle en un mouvement de déconnexion du connecteur 88, la platine équipée 126 rentrant dans l'espace 154. En relâchant l'appui, l'appareil A continu de remonter et sort à nouveau du logement 20 jusqu'à se trouver en position libre - figure 31 - ou il peut à nouveau être retiré.

Les déplacements verticaux du premier support mobile 30 sont marqués par le parcours de l'index dans le profil de la came en coeur 32.

De nombreuses alternatives peuvent être dérivées à partir du mode de réalisation décrit. Notamment le plateau 160 peut facilement être remplacé par un élément de toute forme dès lors que le basculement repousse vers l'ouverture 18 le second support mobile 148.

## Revendications

1. Agencement (10) pour le montage d'un appareil nomade (A) dans un équipement (12) ayant une façade de style (14), notamment dans un véhicule automobile, la façade de style (14) étant pourvue d'une ouverture (18) donnant accès à un logement (20) apte à recevoir l'appareil nomade (A), l'agencement comprenant:
- une embase (22) fixée au fond du logement (20),
- un support mobile (30, 34) déplaçable par rapport à l'embase (22) entre une position enfoncée (P1) dans laquelle il est proche de l'embase (22) et une position libre (P2) dans laquelle il est éloigné de l'embase (22), le support mobile (30, 34) ayant une paroi principale (36) apte à recevoir l'appareil nomade (A),
- un dispositif de retenue (26, 32, 40, 56) qui maintient le support mobile (30, 34) dans ses positions libre (P2) et enfoncée (P1),
de sorte qu'en position enfoncée (P1) la face-avant (16) de l'appareil nomade (A) affleure par l'ouverture (18) et est en continuité de surface avec la façade de style (14) de l'équipement (12) et, en position libre (P2) la paroi principale (36, 38) du support mobile (30, 34) affleure par l'ouverture (18) et est en continuité de surface avec la façade de style (14) de l'équipement (12),
**caractérisé en ce que** le support mobile (30, 34) comprenant un support générique (30), indépendant du modèle d'appareil nomade (A), et un adaptateur d'épaisseur (34) interchangeable et spécifique à un modèle particulier d'appareil nomade (A), l'adaptateur d'épaisseur (34) étant agencé sur le support générique (30), son épaisseur (ep2) étant choisie en fonction de l'épaisseur (ep1) de l'appareil nomade (A) de sorte qu'en position enfoncée (P1) la face-avant (16) de l'appareil nomade (A) dudit modèle soit en continuité de surface avec la façade de style (14).

2. Agencement (10) selon revendication 1 comprenant de plus un moyen élastique (24) agencé entre le support mobile (30,34) et l'embase (22), le moyen élastique (24) sollicitant en permanence le support mobile (30, 34) vers la position libre (P2).

3. Agencement (10) selon l'une quelconque des revendications précédentes comprenant de plus un adaptateur périphérique (44) interchangeable et spécifique à un modèle particulier d'appareil nomade (A), l'adaptateur périphérique (44) étant agencé et fixé dans l'ouverture (18) du logement (20) et étant lui-même pourvu d'une ouverture (58) spécifique aux dimensions (La, Lg) du modèle d'appareil nomade (A), de sorte que, l'appareil nomade (A) étant mis en place sa face-avant (16) obture entièrement l'ouverture spécifique (58) tout en étant en continuité de surface avec la façade de style (14) de l'équipement (12).

4. Agencement (10) selon l'une quelconque des revendications précédentes dans lequel le dispositif de retenue (26, 32, 40, 56) comprend une came (32) et un index (26), la came (32) étant solidaire du support mobile (30) ou de l'embase (22), et l'index étant solidaire de l'embase (22) respectivement du support mobile (30), la came (32) et l'index (26) coopérant de sorte qu'en une position (L3) relative déterminée de la came (32) et de l'index (26) le support mobile (30, 34) soit retenu en position enfoncée (P1).

5. Agencement (10) selon l'une quelconque des revendications précédentes dans lequel le dispositif de retenue (26, 32, 40, 56) comprend une butée (40) solidaire du support mobile (30, 34) qui coopère avec une surface d'appui (56) solidaire de la façade de style (12) de sorte à retenir le support mobile (30, 34) en position libre (P2).

6. Agencement (10) selon une quelconque des revendications précédentes dans lequel la paroi principale (36) du support mobile (30, 34) comporte un couvercle de style (38) amovible et interchangeable.

7. Agencement (10) selon une quelconque des revendications précédentes comprenant de plus un dispositif de maintien (62) en place dans l'emplacement (20) de l'appareil nomade (A).

8. Agencement (10) selon la revendication 7 dans lequel ledit dispositif (62) comprend une platine (70) déplaçable entre une position ouverte (PO) dans laquelle l'appareil nomade (A) peut être mis ou retiré de l'emplacement (20) et, une position fermée (PF) dans laquelle l'appareil nomade (A) est maintenu en place dans l'emplacement (20).

9. Agencement (10) selon la revendication 8 dans lequel dispositif de maintien (62) est pourvu d'un moyen élastique (82, 84) qui, en position fermée (PF) de la platine (70), exerce un effort sur l'appareil nomade (A) de sorte que l'appareil nomade (A) est maintenu en place.

10. Agencement (10) selon la revendication 9 dans lequel le dispositif de maintien comprend en outre un second moyen élastique (82, 84) agencés sur la platine de sorte que, en position fermée de la platine (70), les moyens élastiques (82, 84) exercent sur l'appareil nomade (A) des forces concourantes appliquées en ses coins de sorte à ajuster la position de l'appareil nomade (A) dans l'emplacement (20).

11. Agencement (10) selon l'une quelconque des revendications 7 à 10 comprenant de plus un connecteur électrique (88) adapté à l'appareil nomade (A) de sorte que l'appareil puisse être électriquement rechargé et se trouver relié à un réseau électronique comprenant d'autres dispositifs électroniques.

12. Agencement (10) selon la revendication 11 dans lequel le connecteur (88) est agencé sur la platine (70) de sorte que, en position ouverte (PO) le connecteur (88) est à distance de l'appareil nomade (A) et, en position fermée (PF) le connecteur (88) est approché et complémentairement connecté à l'appareil nomade (A).

13. Agencement (10) selon une quelconque des revendications 8 à 12 comprenant de plus un chemin de came (96) contre lequel est en permanence sollicité un suiveur de came (98), ledit chemin (96), réciproquement le suiveur (98), étant solidaire de la platine (70) alors que le suiveur (98), réciproquement le chemin (96), est solidaire de l'équipement (12), le suiveur (98) parcourant le chemin de came (96) entre une première position atteinte lorsque la platine (70) est en position ouverte (PO) et une seconde position atteinte lorsque la platine (30) est en position fermée (PF), le chemin de came (96) étant pourvu d'au moins un cran (102) de positionnement dans lequel le suiveur (98) s'engage en position fermée (PF) de la platine (70) de sorte à stabiliser ladite position fermée (PF).

14. Agencement (10) selon l'une quelconque des revendications 8 à 13 comprenant de plus un moyen de préhension (66) solidaire de la platine (70) de sorte qu'un utilisateur puisse déplacer manuellement la platine (70) entre les positions ouverte (PO) et fermée (PF).

15. Agencement (10) selon l'une quelconque des revendications 7 à 11 comprenant de plus un moyen automatique, motorisé ou magnétique, de déplacement du dispositif de maintien.

16. Agencement (10) selon la revendication 15 comprenant de plus un actionneur électrique (118) commandant les déplacements du dispositif de maintien (62) et du connecteur (88).

17. Agencement (10) selon la revendication 16 dans lequel les déplacements du dispositif de maintien (62) et du connecteur (88) sont commandés par le même actionneur (118) qui est un moteur électrique (118) pourvu de moyens de transmission (132-144) reliant ledit moteur électrique (118), le dispositif de maintien (62) et le connecteur (88) de sorte que le dispositif de maintien (62) et le connecteur (88) sont entrainés de manière coordonnée et que donc en position rentrée (PR) du dispositif de maintien (62) le connecteur (88) est déconnecté et, en position sortie (PS) le connecteur (88) est connecté.

18. Agencement (10) selon la revendication 17 comprenant de plus un moyen de commande (130) de l'actionneur (118) agencé de sorte qu'il soit alimenté lorsque le support mobile (30) est en position enfoncée (PE).

19. Agencement (10) selon la revendication 18 dans lequel le moyen de commande (130) comprend un capteur de position du support mobile (30).

20. Agencement (10) selon la revendication 19 dans lequel le capteur de position est un contacteur électrique (130) agencé au fond du logement (112) et actionné par le support mobile (30) lorsque celui-ci arrive en position enfoncé (PE).

21. Agencement (10) selon une quelconque des revendications 16 à 20 dans lequel le moyen de commande (130) comprend de plus un détecteur de présence d'appareil nomade (A) sur le support mobile (30) de sorte que, en position libre (PL) du support mobile (30) la présence d'un appareil nomade (A) entraine le déplacement automatique du support mobile (30) vers la position enfoncée (PE).

22. Agencement (10) selon l'une quelconque des revendications 7 à 12 pourvu de plus d'un moyen de transmission mécanique comprenant un second support mobile (148) en translation selon l'axe principal (Z) agencé coopérant avec le premier support mobile (30), le second support mobile (148) étant pourvu d'un emplacement dans lequel est agencé coulissant selon l'axe longitudinal (X) le dispositif de maintien (62).

23. Agencement (10) selon la revendication 22 dans lequel le moyen de transmission mécanique comprend de plus un système bielle-manivelle transmettant et transformant les déplacements selon l'axe principal (Z) du second support mobile (148) en déplacements longitudinaux (X) du dispositif de maintien (62).

24. Kit (60) pour l'installation d'un appareil nomade (A) d'un modèle (M1) particulier dans un équipement (12) pourvu d'une façade de style (14) et d'un agencement (10) réalisé selon la revendication 1, le kit (60) comprenant :
- un adaptateur d'épaisseur (34) pouvant s'agencer sur le support mobile (30), l'adaptateur d'épaisseur (34) ayant les dimensions spécifiquement adaptées au modèle (M1) d'appareil nomade (A),
- un adaptateur périphérique (44) pouvant être agencé et fixé dans l'ouverture (18) du logement (20) et étant lui-même pourvu d'une ouverture spécifique (58) aux dimensions (La, Lg) du modèle (M1) d'appareil nomade (A), de sorte que,
un appareil nomade (A) dudit modèle (M1) étant mis en place, sa face-avant (16) obture entièrement l'ouverture spécifique (58) tout en étant en continuité de surface avec la façade de style (14).

## Patentansprüche

1. Anordnung (10) für die Lagerung eines tragbaren Geräts (A) in einer Einrichtung (12) mit einer Design-Frontwand (14), insbesondere in einem Kraftfahrzeug, wobei die Design-Frontwand (14) mit einer Öffnung (18) versehen ist, die Zugang zu einer Aufnahmeausnehmung (20) gibt, die dazu geeignet ist, das tragbare Gerät (A) aufzunehmen, wobei die Anordnung enthält:
- einen Sockel (22), der am Grund der Aufnahmeausnehmung (20) befestigt ist,
- einen beweglichen Träger (30, 34), der bezüglich des Sockels (22) zwischen einer vertieften Stellung (P1), in welcher er nahe beim Sockel (22) liegt, und einer freien Stellung (P2) verstellbar ist, in welcher er von dem Sockel (22) entfernt liegt, wobei der bewegliche Träger (30, 34) eine Hauptwandung (36) aufweist, die dazu geeignet ist, das tragbare Gerät (A) aufzunehmen,
- eine Haltevorrichtung (26, 32, 40, 56), die den beweglichen Träger (30, 34) in seiner freien (P2) und seiner vertieften Stellung (P1) hält,
so dass in der vertieften Stellung (P1) die Vorderseite (16) des tragbaren Geräts (A) über die Öffnung (18) mit der Design-Frontwand (14) der Einrichtung (12) bündig liegt und einen kontinuierlichen Flächenverlauf mit dieser hat, und in der freien Stellung (P2) die Hauptwandung (36, 38) des beweglichen Trägers (30, 34) über die Öffnung (18) mit der Design-Frontwand (14) der Einrichtung (12) bündig liegt und einen kontinuierlichen Flächenverlauf mit dieser hat,
**dadurch gekennzeichnet, dass**
der bewegliche Träger (30, 34) einen generischen Träger (30) aufweist, der von dem Modell des tragbaren Geräts (A) unabhängig ist, sowie einen Materialdickenadapter (34), der auswechselbar und für ein bestimmtes Modell von tragbarem Gerät (A) spezifisch ausgebildet ist, wobei der Materialdickenadapter (34) an dem generischen Träger (30) angeordnet ist, wobei seine Materialdicke (ep2) in Abhängigkeit von der Materialdicke (ep1) des tragbaren Geräts (A) gewählt ist, so dass in vertiefter Stellung (P1) die Vorderseite (16) des tragbaren Geräts (A) des genannten Modells einen kontinuierlichen Flächenverlauf mit der Design-Frontwand (14) hat.

2. Anordnung (10) nach Anspruch 1, ferner enthaltend ein Federmittel (24), das zwischen dem beweglichen Träger (30, 34) und dem Sockel (22) angeordnet ist, wobei das Federmittel (24) den beweglichen Träger (30, 34) dauerhaft in die freie Stellung (P2) beaufschlagt.

3. Anordnung (10) nach einem der vorangehenden Ansprüche, ferner enthaltend einen Umfangsadapter (44), der auswechselbar und für ein bestimmtes Modell von tragbarem Gerät (A) spezifisch ausgebildet ist, wobei der Umfangsadapter (44) in der Öffnung (18) der Aufnahmeausnehmung (20) angeordnet und darin befestigt ist und seinerseits mit einer spezifisch für die Abmessungen (La, Lg) des Modelles von tragbarem Gerät (A) ausgebildeten Öffnung (58) versehen ist, so dass bei eingesetztem, tragbaren Gerät (A) seine Vorderseite (16) die spezifische Öffnung (58) vollständig verschließt und dabei einen kontinuierlichen Flächenverlauf mit der Design-Frontwand (14) der Einrichtung (12) hat.

4. Anordnung (10) nach einem der vorangehenden Ansprüche, wobei die Haltevorrichtung (26, 32, 40, 56) einen Nocken (32) und eine Kennung (26) aufweist, wobei der Nocken (32) fest mit dem beweglichen Träger (30) bzw. mit dem Sockel (22) verbunden ist und die Kennung fest mit dem Sockel (22) bzw. mit dem beweglichen Träger (30) verbunden ist, wobei der Nocken (32) und die Kennung (26) so zusammenwirken, dass in einer bestimmten Relativstellung (L3) des Nockens (32) und der Kennung (26) der bewegliche Träger (30, 34) in vertiefter Stellung (P1) gehalten wird.

5. Anordnung (10) nach einem der vorangehenden Ansprüche, wobei die Haltevorrichtung (26, 32, 40, 56) einen Anschlag (40) aufweist, der fest mit dem beweglichen Träger (30, 34) verbunden ist, der mit einer Abstützfläche (56) zusammenwirkt, die fest mit der Design-Frontwand (12) verbunden ist, so dass der bewegliche Träger (30, 34) in freier Stellung (P2) gehalten wird.

6. Anordnung (10) nach einem der vorangehenden Ansprüche, wobei die Hauptwandung (36) des beweglichen Trägers (30, 34) eine abnehmbare und auswechselbare Design-Abdeckung (38) aufweist.

7. Anordnung (10) nach einem der vorangehenden Ansprüche, ferner enthaltend eine Haltevorrichtung (62), die an der Aufnahmestelle (20) des tragbaren Geräts (A) eingesetzt ist.

8. Anordnung (10) nach Anspruch 7, wobei die Vorrichtung (62) eine Platte (70) aufweist, die zwischen einer Offenstellung (PO), in welcher das tragbare Gerät (A) in die Aufnahmestelle (20) eingesetzt oder herausgenommen werden kann, und einer Schließstellung (PF) verstellbar ist, in welcher das tragbare Gerät (A) in der Aufnahmestelle (20) in Stellung gehalten wird.

9. Anordnung (10) nach Anspruch 8, wobei die Haltevorrichtung (62) mit einem Federmittel (82, 84) versehen ist, die in Schließstellung (PF) der Platte (70) eine Kraft auf das tragbare Gerät (A) ausübt, so dass das tragbare Gerät (A) in Stellung gehalten wird.

10. Anordnung (10) nach Anspruch 9, wobei die Haltevorrichtung ferner ein zweites Federmittel (82, 84) aufweist, das an der Platte so angeordnet ist, dass in Schließstellung der Platte (70) die Federmittel (82, 84) auf das tragbare Gerät (A) zusammenwirkende Kräfte ausüben, die an dessen Ecken aufgebracht werden, so dass die Stellung des tragbaren Geräts (A) in der Aufnahmestelle (20) angeglichen wird.

11. Anordnung (10) nach einem der Ansprüche 7 bis 10, ferner enthaltend einen elektrischen Verbinder (88), der auf das tragbare Gerät (A) abgestimmt ist, so dass das Gerät elektrisch aufgeladen werden und mit einem elektronischen Netzwerk verbunden werden kann, das weitere elektronische Vorrichtungen enthält.

12. Anordnung (10) nach Anspruch 11, wobei der Verbinder (88) an der Platte (70) so angeordnet ist, dass in Offenstellung (PO) der Verbinder (88) im Abstand von dem tragbaren Gerät (A) liegt und in Schließstellung (PF) der Verbinder (88) dem tragbaren Gerät (A) angenähert und zusätzlich mit diesem verbunden ist.

13. Anordnung (10) nach einem der Ansprüche 8 bis 12, ferner enthaltend eine Nockenbahn (96), gegen die dauerhaft ein Nockennachsteller (98) beaufschlagt wird, wobei die Nockenbahn (96) bzw. umgekehrt der Nachsteller (98) fest mit der Platte (70) verbunden ist, während der Nachsteller (98) bzw. umgekehrt die Nockenbahn (96) fest mit der Einrichtung (12) verbunden ist, wobei der Nachsteller (98) die Nockenbahn (96) zwischen einer ersten Stellung, die dann erreicht ist, wenn die Platte (70) in Offenstellung (PO) ist, und einer zweiten Stellung durchläuft, die dann erreicht ist, wenn die Platte (30) in Schließstellung (PF) ist, wobei die Nockenbahn (96) mit zumindest einer Positionierraste (102) versehen ist, in welche der Nachsteller (98) in Schließstellung (PF) der Platte (70) eingreift, so dass die genannte Schließstellung (PF) stabilisiert wird.

14. Anordnung (10) nach einem der Ansprüche 8 bis 13, ferner enthaltend ein Greifmittel (66), das fest mit der Platte (70) verbunden ist, so dass ein Benutzer die Platte (70) manuell zwischen der Offenstellung (PO) und der Schließstellung (PF) verlagern kann.

15. Anordnung (10) nach einem der Ansprüche 7 bis 11, ferner enthaltend ein automatisches, motorisiertes oder magnetisches Mittel zum Verlagern der Haltevorrichtung.

16. Anordnung (10) nach Anspruch 15, ferner enthaltend ein elektrisches Betätigungsglied (118), das die Verlagerungen der Haltevorrichtung (62) und des Verbinders (88) steuert.

17. Anordnung (10) nach Anspruch 16, wobei die Verlagerungen der Haltevorrichtung (62) und des Verbinders (88) über das gleiche Betätigungsglied (118) gesteuert werden, das ein elektrischer Motor (118) ist, der mit Übertragungsmitteln (132 - 144) versehen ist, welche den elektrischen Motor (118), die Haltevorrichtung (62) und den Verbinder (88) so verbinden, dass die Haltevorrichtung (62) und der Verbinder (88) koordiniert angetrieben werden und dass somit in eingefahrener Stellung (PR) der Haltevorrichtung (62) der Verbinder (88) abgesteckt ist und in Austrittsstellung (PS) der Verbinder (88) angesteckt ist.

18. Anordnung (10) nach Anspruch 17, ferner enthaltend ein Steuermittel (130) zum Steuern des Betätigungsglieds (118), das so angeordnet ist, dass es dann versorgt wird, wenn der bewegliche Träger (30) in vertiefter Stellung (PE) ist.

19. Anordnung (10) nach Anspruch 18, wobei das Steuermittel (130) einen Positionssensor für die Position des beweglichen Trägers (30) enthält.

20. Anordnung (10) nach Anspruch 19, wobei der Positionssensor ein elektrischer Kontaktgeber (130) ist, der am Grund der Aufnahmeausnehmung (112) angeordnet ist und über den beweglichen Träger (30) betätigt wird, wenn dieser in die vertiefte Stellung (PE) gelangt.

21. Anordnung (10) nach einem der Ansprüche 16 bis 20, wobei das Steuermittel (130) ferner einen Anwesenheitsdetektor für das Vorhandensein des tragbaren Geräts (A) am beweglichen Träger (30) aufweist, so dass in freier Stellung (PL) des beweglichen Trägers (30) das Vorhandensein eines tragbaren Geräts (A) die automatische Verlagerung des beweglichen Trägers (30) in die vertiefte Stellung (PE) bewirkt.

22. Anordnung (10) nach einem der Ansprüche 7 bis 12, ferner enthaltend ein mechanisches Übertragungsmittel, das einen zweiten beweglichen Träger (148) aufweist, der in der Hauptachse (Z) verschiebbar ist und mit dem ersten beweglichen Träger (30) zusammenwirkend angeordnet ist, wobei der zweite bewegliche Träger (148) mit einer Aufnahmestelle versehen ist, in welcher die Haltevorrichtung (62) in der Längsachse (X) gleitbeweglich angeordnet ist.

23. Anordnung (10) nach Anspruch 22, wobei das mechanische Übertragungsmittel ferner ein Schubkurbelgetriebe aufweist, welches die Verlagerungen des zweiten beweglichen Trägers (148) in der Hauptachse (Z) überträgt und in Längsverlagerungen (X) der Haltevorrichtung (62) umwandelt.

24. Set (60) für die Aufstellung eines tragbaren Geräts (A) eines bestimmten Modells (M1) in einer Einrichtung (12), die mit einer Design-Frontwand (14) und einer Anordnung (10) nach Anspruch 1 versehen ist, wobei das Set (60) enthält:
- einen Materialdickenadapter (34), der an dem beweglichen Träger (30) angeordnet werden kann, wobei der Materialdickenadapter (34) spezifisch auf das Modell (M1) des tragbaren Geräts (A) abgestimmte Abmessungen hat,
- einen Umfangsadapter (44), der in der Öffnung (18) der Aufnahmeausnehmung (20) angeordnet und darin befestigt werden kann und selbst mit einer spezifischen Öffnung (58) versehen ist, die spezifisch für die Abmessungen (La, Lg) des Modelles (M1) des tragbaren Geräts (A) ausgebildet ist, so dass
bei einem eingesetzten tragbaren Gerät (A) des Modells (M1), seine Vorderseite (16) die spezifische Öffnung (58) vollständig verschließt und dabei einen kontinuierlichen Flächenverlauf mit der Design-Frontwand (14) hat.

## Claims

1. Arrangement (10) for mounting a portable device (A) in a piece of equipment (12) having a stylistic facade (14), notably in a motor vehicle, the stylistic facade (14) being provided with an opening (18) providing access to a housing (20) able to accept the portable device (A), the arrangement comprising:
- a base (22) fixed to the bottom of the housing (20),
- a mobile support (30, 34) that can be moved with respect to the base (22) between a pushed-in position (P1) in which it is close to the base (22) and a free position (P2) in which it is distant from the base (22), the mobile support (30, 34) having a main wall (36) able to accept the portable device (A),
- a retention device (26, 32, 40, 56) which keeps the mobile support (30, 34) in its free (P2) and pushed-in (P1) positions,
so that in the pushed-in position (P1) the front face (16) of the portable device (A) lies flush with the opening (18) and is in surface continuity with the stylistic facade (14) of the piece of equipment (12) and, in the free position (P2), the main wall (36, 38) of the mobile support (30, 34) lies flush with the opening (18) and is in surface continuity with the stylistic facade (14) of the piece of equipment (12),
**characterized in that** the mobile support (30, 34) comprising a generic support (30) independent of the model of mobile device (A) and a thickness adapter (34) that is interchangeable and specific to one particular model of mobile device (A), the thickness adapter (34) being arranged on the generic support (30), its thickness (ep2) being chosen according to the thickness (ep1) of the mobile device (A) so that in the pushed-in position (P1) the front face (16) of the mobile device (A) of that said model is in surface continuity with the stylistic facade (14).

2. Arrangement (10) according to Claim 1, additionally comprising an elastic means (24) arranged between the mobile support (30, 34) and the base (22), the elastic means (24) constantly urging the mobile support (30, 34) towards the free position (P2).

3. Arrangement (10) according to either one of the preceding claims, additionally comprising a peripheral adapter (44) that is interchangeable and specific to a particular model of mobile device (A), the peripheral adapter (44) being arranged and fixed in the opening (18) of the housing (20) and being itself provided with an opening (58) specific to the dimensions (La, Lg) of that model of mobile device (A) so that when the mobile device (A) is put in place, its front face (16) completely closes off the specific opening (58) while at the same time being in surface continuity with the stylistic facade (14) of the piece of equipment (12).

4. Arrangement (10) according to any one of the preceding claims, in which the retention device (26, 32, 40, 56) comprises a cam (32) and an index (26), the cam (32) being secured to the mobile support (30) or to the base (22), and the index being secured to the base (22) or to the mobile support (30) respectively, the cam (32) and the index (26) collaborating in such a way that in one determined relative position (L3) of the cam (32) and of the index (26), the mobile support (30, 34) is retained in the pushed-in position (P1).

5. Arrangement (10) according to any one of the preceding claims, in which the retention device (26, 32, 40, 56) comprises an end stop (40) secured to the mobile support (30, 34) and which collaborates with a bearing surface (56) secured to the stylistic facade (12) so as to retain the mobile support (30, 34) in the free position (P2).

6. Arrangement (10) according to any one of the preceding claims, in which the main wall (36) of the mobile support (30, 34) comprises a removable and interchangeable stylistic cover (38).

7. Arrangement (10) according to any one of the preceding claims, additionally comprising a retaining device (62) for holding the mobile device (A) in place in the space (20).

8. Arrangement (10) according to Claim 7, in which the said device (62) comprises a plate (70) that can move between an open position (PO) in which the mobile device (A) can be put into or removed from the space (20) and a closed position (PF) in which the mobile device (A) is held in place in the space (20).

9. Arrangement (10) according to Claim 8, in which the retaining device (62) is provided with an elastic means (82, 84) which, when the plate (70) is in the closed position (PF), applies force to the mobile device (A) so that the mobile device (A) is held in place.

10. Arrangement (10) according to Claim 9, in which the retaining device further comprises a second elastic means (82, 84) arranged on the plate so that when the plate (70) is in the closed position, the elastic means (82, 84) apply concurrent forces to the corners of the mobile device (A) in order to fine-tune the position of the mobile device (A) in the space (20).

11. Arrangement (10) according to any one of Claims 7 to 10 additionally comprising an electrical connector (88) suitable for the mobile device (A) so that the device can be electrically recharged and can be connected to an electronic network comprising other electronic devices.

12. Arrangement (10) according to Claim 11, in which the connector (88) is arranged on the plate (70) so that, in the open position (PO), the connector (88) is distant from the mobile device (A) and, in the closed position (PF), the connector (88) is brought in closer and also connected to the mobile device (A).

13. Arrangement (10) according to any one of Claims 8 to 12, additionally comprising a camway (96) against which a cam follower (98) is constantly urged, the said camway (96) or, conversely, the cam follower (98) being secured to the plate (70) whereas the cam follower (98) or, conversely, the camway (96) is secured to the equipment (12), the follower (98) travelling along the camway (96) between a first position that is reached when the plate (70) is in its open position (PO) and a second position that is reached when the plate (30) is in the closed position (PF), the camway (96) being provided with at least one positioning notch (102) in which the follower (98) engages when the plate (70) is in the closed position (PF) so as to stabilize the said closed position (PF).

14. Arrangement (10) according to any one of Claims 8 to 13, additionally comprising a means (66) for grasping, secured to the plate (70), so that a user can move the plate (70) by hand between the open (PO) and closed (PF) positions.

15. Arrangement (10) according to any one of Claims 7 to 11, additionally comprising a motorized or magnetic automatic means of moving the retaining device.

16. Arrangement (10) according to Claim 15, additionally comprising an electric actuator (118) controlling the movements of the retaining device (62) and of the connector (88).

17. Arrangement (10) according to Claim 16, in which the movements of the retaining device (62) and of the connector (88) are controlled by the same actuator (118) which is an electric motor (118) provided with transmission means (132-144) connecting the said electric motor (118), the retaining device (62) and the connector (88) so that the retaining device (62) and the connector (88) are driven in a coordinated manner and so that when the retaining device (62) is in the retracted position (PR) the connector (88) is therefore disconnected, and so that when in the deployed position (PS) the connector (88) is therefore connected.

18. Arrangement (10) according to Claim 17, additionally comprising a control means (130) for controlling the actuator (118), which control means is arranged in such a way that it is powered when the mobile support (30) is in the pushed-in position (PE).

19. Arrangement (10) according to Claim 18, in which the control means (130) comprises a position sensor that senses the position of the mobile support (30).

20. Arrangement (10) according to Claim 19, in which the position sensor is an electric contactor (130) arranged at the bottom of the housing (112) and actuated by the mobile support (30) when the latter reaches the pushed-in position (PE).

21. Arrangement (10) according to any one of Claims 16 to 20, in which the control means (130) additionally comprises a detector of the presence of the mobile device (A) on the mobile support (30) so that when the mobile support (30) is in the free position (PL) the presence of a mobile device (A) causes the mobile support (30) to be moved automatically towards the pushed-in position (PE).

22. Arrangement (10) according to any one of Claims 7 to 12, additionally provided with a mechanical transmission means comprising a second mobile support (148) mobile in a translational movement along the main axis (Z) designed to collaborate with the first mobile support (30), the second mobile support (148) being provided with a space in which the retaining device (62) is arranged with the ability to slide along the longitudinal axis (X).

23. Arrangement (10) according to Claim 22, in which the mechanical transmission device additionally comprises a connecting-rod/crank system that transmits movements along the main axis (Z) of the second mobile support (148) and converts them into longitudinal movements (X) of the retaining device (62).

24. Kit (60) for installing a mobile device (A) of a particular model (M1) in a piece of equipment (12) provided with a stylistic facade (14) and with an arrangement (10) produced according to Claim 1, the kit (60) comprising:
- a thickness adapter (34) that can be arranged on the mobile support (30), the thickness adapter (34) having dimensions specifically suited to that model (M1) of mobile device (A),
- a peripheral adapter (44) that can be arranged and fixed in the opening (18) of the housing (20) and that is itself provided with an opening (58) specific to the dimensions (La, Lg) of that model (M1) of mobile device (A), so that
when a mobile device (A) of that said model (M1) is put in place, its front face (16) completely closes off the specific opening (58) while at the same time being in surface continuity with the stylistic facade (14).
